# EUROPEAN PATENT SPECIFICATION

(11) **EP 4 575 743 B1**
(45) Date of publication and mention of the grant of the patent: **23.09.2026**
(21) Application number: 23861932.4
(22) Date of filing: 06.06.2023
(51) Int. Cl.: G06F 3/06, G06F 16/182

(54) **DATA STORAGE METHOD AND APPARATUS, AND RELATED DEVICE**
DATENSPEICHERUNGSVERFAHREN UND -VORRICHTUNG SOWIE ZUGEHÖRIGE VORRICHTUNG
PROCÉDÉ ET APPAREIL DE STOCKAGE DE DONNÉES, ET DISPOSITIF ASSOCIÉ

(30) Priority: 05.09.2022 CN 202211078657
(43) Date of publication of application: 25.06.2025
(73) Proprietor: Huawei Cloud Computing Technologies Co., Ltd., Guiyang, Guizhou, 550025 (CN)
(72) Inventor: WU, Yanzan, Guiyang, Guizhou 550025 (CN); WEI, Mingchang, Guiyang, Guizhou 550025 (CN)
(74) Representative: Gill Jennings & Every LLP
(86) International application number: PCT/CN2023/098484
(87) International publication number: WO 2024/051229

(56) References cited:
- CN-A- 105 488 148
- CN-A- 105 488 148
- CN-A- 108 804 043
- CN-A- 109 933 597
- CN-A- 112 463 058
- CN-A- 114 595 092
- US-A1- 2020 310 652

## Description

### TECHNICAL FIELD

This application relates to the field of data processing technologies, and in particular, to a data storage method and apparatus, and a related device.

### BACKGROUND

With expansion of a scale of a distributed storage system, the distributed storage system based on a storage and computing separation architecture is gradually applied. The distributed storage system based on the storage and computing separation architecture may include a plurality of client modules, a plurality of computing broker modules, and a plurality of storage modules. A data stream received by the client module may be computed and processed by the computing broker module, and stored in one or more storage modules. The storage module may also be referred to as a storage node.

Currently, the computing broker module may segment the data stream received by the client module, and split the data stream into a plurality of data segments (segment). The plurality of data segments obtained through splitting may be stored in one storage node, or may be respectively stored in a plurality of storage nodes. The computing broker module may store the plurality of data segments in sequence. When storing a data segment, the computing broker module may split the data segment into a plurality of data fragments (fragment) and stores the plurality of data fragments in sequence. However, currently, the distributed storage system based on the storage and computing separation architecture serially stores data, and a data throughput is low.

CN105488148A discloses a big data storage and access system including real-time data service nodes, historical data service nodes, and a distributed coordination server managing data transfer, storage organization, and query processing between real-time and historical datasets.

### SUMMARY

In view of this, this application provides a data storage method, used to store a received data stream concurrently, so that a throughput of a distributed storage system is improved, and efficient data storage is implemented. This application further provides a corresponding apparatus, a computing device cluster, a computer-readable storage medium, and a computer program product.

According to a first aspect, this application provides a data storage method, and the method is performed by a data storage apparatus. The data storage apparatus may be, for example, a software apparatus running in a computing broker module of a distributed storage system. In a specific implementation, the data storage apparatus obtains a plurality of data fragments, where the plurality of data fragments belong to a first data segment in a to-be-stored first data stream. Then, the data storage apparatus determines, based on a first storage parameter, whether the first data segment meets a storage condition. The first storage parameter is determined based on a storage case of a data segment in front of the first data segment in the first data stream. If the first data segment meets the storage condition, the data storage apparatus stores the plurality of data fragments concurrently in the distributed storage system, and updates the first storage parameter based on a storage case of the plurality of data fragments.

In this way, when the first data segment meets the storage condition, the data storage apparatus may concurrently store the plurality of data fragments included in the first data segment. If all the plurality of data segments in the first data stream meet the storage condition, the data storage apparatus may store a plurality of data fragments in the plurality of data segments concurrently. Concurrent storage of the plurality of data fragments can effectively improve a throughput of the distributed storage system. In addition, whether the first data segment meets the storage condition is determined by using a storage case of another data segment in front of the first data segment in the data stream, so that a data hole can be avoided. Moreover, the first storage parameter is used to record a case of a stored data segment in the first data stream, and if the computing broker module is faulty, recovery may be performed based on the first storage parameter.

In a possible implementation, when the plurality of data fragments are stored concurrently, the data storage apparatus may store the plurality of data fragments in one or more storage nodes concurrently. For example, if the plurality of data fragments obtained by the data storage apparatus include a first data fragment and a second data fragment, and the distributed storage system includes a first storage node and a second storage node, when storing the first data fragment and the second data fragment, the data storage apparatus may simultaneously send the first data fragment and the second data fragment to the first storage node. The first storage node stores the first data fragment and the second data fragment concurrently by using two threads (or processes) executed concurrently. Alternatively, the data storage apparatus may send the first data fragment to the first storage node, and send the second data fragment to the second storage node. The first data fragment and the second data fragment are respectively stored by using different threads (or processes) on the first storage node and the second storage node. In this way, the plurality of data fragments are stored in the one or more storage nodes concurrently, to improve storage efficiency of a data segment.

In a possible implementation, whether the first data segment meets the storage condition is determined based on a storage case of a data segment in front of a second data segment in the first data stream. The second data segment is a data segment in front of the first data segment in the first data stream, and a quantity of data segments between the second data segment and the first data segment in the first data stream is less than a preset quantity. In other words, if a quantity of data segments between a 1^{st} unstored data segment and the first data segment in the first data stream is less than the preset quantity, the first data segment meets the storage condition. Optionally, the first storage parameter is determined based on a right boundary of a header continuous storage part of the first data stream. The header continuous storage part of the first data stream includes one or more continuous stored data fragments in a header of the first data stream. Correspondingly, when it is determined whether the first data segment meets the storage condition, it may be determined whether the second data segment belongs to the header continuous storage part of the first data stream. If the second data segment belongs to the header continuous storage part of the first data stream, it indicates that the second data segment and all data segments in front of the second data segment in the first data stream have been stored, and the first data segment meets the storage condition. In this way, after it is determined that the second data segment and the data segment in front of the second data segment in the first data stream are all stored, the first data segment is stored, so that the data hole can be avoided in a storage process. It may be understood that "storage" described above (including the following) means storing a data fragment or a data segment in the distributed storage system.

In some possible implementations, as the data fragments in the first data segment are stored in the distributed storage system, the data storage apparatus may update the first storage parameter. Specifically, if any data segment in front of the first data segment in the first data stream has been stored in the distributed storage system, and any data fragment in the first data segment has been stored in the distributed storage system, the data storage apparatus may adjust the first storage parameter. In other words, if the right boundary of the header continuous storage part of the first data stream moves to the first data segment, the data storage apparatus adjusts the first storage parameter based on a location of the first data segment in the first data stream. If the right boundary of the header continuous storage part of the first data stream moves to the first data segment, an adjusted first storage parameter may indicate that a third data segment meets the storage condition. The third data segment is a data segment behind the first data segment in the first data stream, and a quantity of data segments between the first data segment and the third data segment in the first data stream is less than the preset quantity. In this way, the first storage parameter is gradually adjusted as the data segments in the first data stream are stored, so that a data segment at the back of the first data stream can be stored.

In some possible implementations, the first data stream is received by a client module and sent to the data storage apparatus. Correspondingly, the data storage apparatus may notify the client module after the data stream is stored. Specifically, the data storage apparatus may generate a notification message based on the first storage parameter, and send the notification message to the client module. The notification message indicates that the header continuous storage part corresponding to the first storage parameter has been stored. In other words, if the first storage parameter is updated after the first data segment and all data segments in front of the first data segment in the first data stream are stored, the notification message generated based on the first storage parameter may indicate that the data fragments in the first data segment have been stored. In this way, because the header continuous storage part is not lost due to a fault, the notification message is sent to the client module based on a storage case of the header continuous storage part, so that a user can know a storage case of the first data stream when the data hole is avoided.

In some possible implementations, the data storage apparatus is a software apparatus running in a first computing broker module. If a second computing broker module in which the data storage apparatus runs is faulty, a storage task executed by the second computing broker module may be executed by the data storage apparatus on the first computing broker module, and storage of a data stream continues. In this way, even if a computing broker module in the distributed storage system is faulty, a data stream may be stored by using another computing broker module.

In some possible implementations, the second computing broker module before the fault occurs is configured to store a second data stream. Therefore, before a plurality of data fragments in the second data stream are stored concurrently, the data storage apparatus first obtains a second storage parameter, where the second storage parameter indicates a case in which data segments in the second data stream are stored by the second computing broker module. Then, the computing broker module determines an identifier of a fourth data fragment based on the second storage parameter. The fourth data fragment is a data fragment in the second data stream, and all data fragments in front of the fourth data fragment in the second data stream have been stored in the distributed storage system by the second computing broker module. In other words, the fourth data fragment is a 1^{st} data fragment behind a header continuous storage part in the second data stream. In this way, the data storage apparatus may store the fourth data fragment and a data fragment behind the fourth data fragment in the second data stream based on the second storage parameter. For a method for storing a fragment, refer to a storage method for storing a data fragment in the first data stream. Details are not described herein again. In this way, the fourth data fragment is determined and stored based on the second storage parameter, so that the data hole can be avoided.

In some possible implementations, the data storage apparatus may further store a data fragment in front of a third data fragment. For example, if the third data fragment belongs to a fifth data segment, and the third data fragment is not a 1^{st} data fragment in the fifth data segment, when storing the second data stream, the data storage apparatus may start storage from the fifth data segment. In other words, even if one or more data fragments in the fifth data segment have been stored, the data storage apparatus still starts storage from a 1^{st} data fragment in the first data segment. In this way, the data hole can be further avoided by repeatedly storing a data fragment in a data segment.

In some possible implementations, the second storage parameter is obtained by the data storage apparatus through query. Specifically, when obtaining the second storage parameter, the data storage apparatus first sends, to at least one storage node, a query request that includes an identifier of the second data stream. Then, the data storage apparatus may receive an identifier set sent by a storage node. The identifier set sent by the storage node includes identifiers that are of data fragments in the second data stream and that are stored in the storage node. After obtaining the identifier set, the data storage apparatus determines the second storage parameter based on the identifier set. In this way, a storage case of the data fragments in the second data stream may be determined by sending the query request to the storage node, to recover storage of the second data stream.

In some possible implementations, the storage node may record a storage case of data based on an identifier of a data segment. Correspondingly, when querying a storage case of a data fragment in the second data stream, the data storage apparatus may perform query based on an identifier of the data segment. Specifically, for a fourth data segment in the second data stream, the data storage apparatus may obtain an identifier of the fourth data segment, and generate a first query request based on the identifier of the fourth data segment. In this way, the first query request is used to query a case in which data fragments in the fourth data segment are stored.

According to a second aspect, this application further provides a data storage apparatus. The apparatus is applied to a computing broker module in a distributed storage system, and the apparatus includes: a data obtaining unit, configured to obtain a plurality of data fragments, where the plurality of data fragments belong to a first data segment in a first data stream; a concurrent storage unit, configured to: in response to a first storage parameter indicating that the first data segment meets a storage condition, store the plurality of data fragments concurrently in the distributed storage system, where the first storage parameter is determined based on a storage case of a data segment in front of the first data segment in the first data stream, and the distributed storage system includes a plurality of storage nodes; and a storage parameter update unit, configured to update the first storage parameter based on a storage case of the plurality of data fragments.

In some possible implementations, the plurality of data fragments include a first data fragment and a second data fragment, the distributed storage system includes a first storage node and a second storage node. The concurrent storage unit is specifically configured to send the first data fragment and the second data fragment to the first storage node, where a thread used to store the first data fragment and a thread used to store the second data fragment are different and are executed concurrently on the first storage node; or send the first data fragment to the first storage node, and send the second data fragment to the second storage node.

In some possible implementations, the concurrent storage unit is further configured to: in response to the first storage parameter indicating that a data segment in front of a second data segment in the first data stream has been stored in the distributed storage system, determine that the first data segment meets the storage condition, where the second data segment is a data segment in front of the first data segment in the first data stream, and a quantity of data segments between the second data segment and the first data segment in the first data stream is less than a preset quantity.

In some possible implementations, the storage parameter update unit is specifically configured to: in response to that the data segment in front of the first data segment in the first data stream has been stored in the distributed storage system and any data fragment in the first data segment has been stored in the distributed storage system, adjust the first storage parameter, so that the first storage parameter indicates that a third data segment meets the storage condition, where the third data segment is a data segment behind the first data segment in the first data stream, and a quantity of data segments between the first data segment and the third data segment in the first data stream is less than the preset quantity.

In some possible implementations, the first data stream is sent by a client module, and after the first storage parameter is adjusted, the apparatus further includes a notification unit. The notification unit is configured to generate a notification message based on the first storage parameter, where the notification message indicates that the data fragments in the first data segment have been stored in the distributed storage system; and send the notification message to the client module.

In some possible implementations, the apparatus further includes a storage parameter determining unit and a data fragment determining unit.

The storage parameter determining unit is configured to: in response to a fault occurring on a second computing broker module, determine a second storage parameter, where the second storage parameter indicates a case in which a data segment in a second data stream is stored in the distributed storage system, and the second computing broker module is configured to store the second data stream in the distributed storage system. The data fragment determining unit is configured to determine an identifier of a third data fragment based on the second storage parameter, where the third data fragment belongs to the second data stream, and a data fragment in front of the third data fragment in the second data stream has been stored in the distributed storage system by the second computing broker module. The concurrent storage unit is further configured to store the third data fragment and a data fragment behind the third data fragment in the second data stream in the distributed storage system based on the second storage parameter.

In some possible implementations, the storage parameter determining unit is specifically configured to send a query request to the plurality of storage nodes, where the query request includes an identifier of the second data stream; obtain identifier sets reported by the plurality of storage nodes, where the plurality of storage nodes include a third storage node, and an identifier set reported by the third storage node includes identifiers that are of data fragments in the second data stream and that are stored in the third storage node; and determine the second storage parameter based on the identifier set reported by the at least one storage node.

In some possible implementations, the storage parameter determining unit is further configured to obtain an identifier of a fourth data segment, where the fourth data segment belongs to the second data stream, and the fourth data segment includes a plurality of data fragments; and generate the first query request based on the identifier of the fourth data segment, where the first query request is used to query a case in which the data fragments in the fourth data segment are stored in the distributed storage system.

According to a third aspect, this application provides a computing device cluster. The computing device cluster includes at least one computing device, and the at least one computing device includes at least one processor and at least one memory. The at least one memory is configured to store instructions, and the at least one processor executes the instructions stored in the at least one memory, to enable the computing device cluster to perform the data storage method according to any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random-access memory.

According to a fourth aspect, this application provides a computer-readable storage medium. The computer-readable storage medium stores instructions. When the instructions are run on at least one computing device, the at least one computing device is enabled to perform the method according to any one of the first aspect or the implementations of the first aspect.

According to a fifth aspect, this application provides a computer program product including instructions. When the computer program product runs on at least one computing device, the at least one computing device is enabled to perform the method according to any one of the first aspect or the implementations of the first aspect.

In this application, based on the implementations according to the foregoing aspects, the implementations may be further combined to provide more implementations.

### BRIEF DESCRIPTION OF DRAWINGS

FIG. 1 is a diagram of an example application scenario according to an embodiment of this application;
FIG. 2 is a diagram of another example application scenario according to an embodiment of this application;
FIG. 3 is a schematic flowchart of a data storage method according to an embodiment of this application;
FIG. 4 is a diagram of still another example application scenario according to an embodiment of this application;
FIG. 5 is another schematic flowchart of a data storage method according to an embodiment of this application;
FIG. 6 is a diagram of a structure of a computing device according to an embodiment of this application; and
FIG. 7 is a diagram of a structure of a computing device cluster according to an embodiment of this application.

### DESCRIPTION OF EMBODIMENTS

The following describes the solutions in embodiments provided in this application with reference to the accompanying drawings in this application.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application.

A distributed storage system may include one or more storage nodes. Each storage node may be configured to store data. A storage capacity of the storage system can be expanded by using a plurality of storage nodes to store data. To improve a dynamic expansion capability of the distributed storage system, currently, a storage function and a computing function of the distributed storage system may be separated. For example, a to-be-stored data stream may be received by using a client (client) module, the computing function of the distributed storage system may be implemented by using a computing broker (broker) module, and the storage function of the distributed storage system may be implemented by using a storage (store) node.

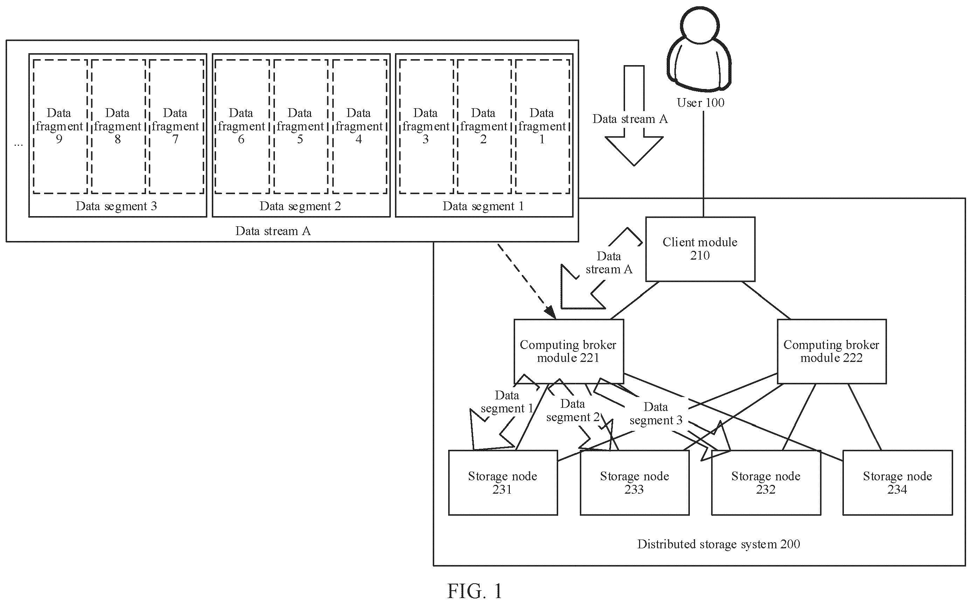

For example, refer to an example application scenario shown in FIG. 1. In the application scenario shown in FIG. 1, a distributed storage system 200 includes a client module 210, a computing broker module 221, a computing broker module 222, a storage node 231, a storage node 232, a storage node 233, and a storage node 234. A user 100 may send data to the distributed storage system 200 (by using a client or a user terminal), so that the distributed storage system 200 stores the data. The data may be received by the client module 210 in the distributed storage system 200 in a form of a data stream. After receiving the data stream, the client module 210 may forward the data stream to the computing broker module 221. The computing broker module 221 may split data in the data stream into a plurality of data segments, and store the plurality of data segments in one or more storage nodes.

For example, it is assumed that the user 100 sends to-be-stored data to the client module 210 in the distributed storage system 200 in a form of a data stream A. The client module 210 may receive the data stream A, and forward the data stream A to the computing broker module 221. The computing broker module 221 first splits the data stream A into a plurality of data segments (three data segments in the scenario shown in FIG. 1) according to a sequence in the data stream A. Then, the computing broker module 221 splits each data segment into a plurality of data fragments (three data fragments in the scenario shown in FIG. 1), and stores the plurality of data fragments into the storage node.

For ease of description, in embodiments of this application, it is assumed that a data segment 1 corresponds to the storage node 231, a data segment 2 corresponds to the storage node 232, and a data segment 3 corresponds to the storage node 233.

If partial data in the data stream is not stored, partial data in front of the partial data in the data stream is stored, and partial data behind the partial data in the data stream is stored, it may be considered that a data hole exists in the data stream. In other words, if the data segment 1 and the data segment 3 have been stored but the data segment 2 or any data fragment in the data segment 2 is not stored, a data hole exists in the data stream A. If a data fragment 1 and a data fragment 3 have been stored but a data fragment 2 has not been stored, a data hole still exists in the data stream A.

The data hole may cause stored data to be unrecoverable. Therefore, to avoid the data hole, the computing broker module 221 stores the data segments in the data stream in sequence. A sequence in which the computing broker module 221 stores the data segments is a sequence in which the data segments in the data stream are received by the client module 210, that is, an actual sequence of data segments in data that the user 100 needs to store. In other words, the computing broker module 221 may first send the data segment 1 to the storage node 231. After the data segment 1 is written into the storage node 231, the computing broker module 221 sends the data segment 2 to the storage node 232. Similarly, after the data segment 2 is written into the storage node 232, the computing broker module 221 sends the data segment 3 to the storage node 233. When the data segment 1 is written into the storage node 231, the computing broker module 221 first sends the data fragment 1 in the data segment 1 to the storage node 231. After the data segment 1 is written into the storage node 231, the computing broker module 221 sends the data fragment 1 in the data segment 2 to the storage node. It may be understood that, if there are more than three data segments in the data stream A, the computing broker module 221 writes the data segments into the storage nodes according to a sequence of receiving the data segments; and if each data segment in the data stream A includes more than three data fragments, the computing broker module 221 writes the data fragments into a corresponding storage node according to a sequence of the data fragments in the data segment.

It can be learned from the foregoing descriptions that, because the data segments in the data stream are serially written into the storage nodes by the computing broker module, and for each data segment, the computing broker module serially writes data fragments in the data segment. Therefore, for a data stream received by the client, the computing broker module simultaneously writes a data fragment into a storage node. In this way, a throughput of the data stream in unit time depends on a bandwidth between the computing broker module and a single storage node. The throughput of the data stream is low, and consequently the data stream cannot be efficiently stored.

Based on this, an embodiment of this application provides a data storage method. The method may be performed by a data storage apparatus, to implement concurrent storage of a data stream, and improve a throughput of the data stream. Specifically, the data storage apparatus first obtains a first data segment in a first data stream, where the first data stream further includes a plurality of data segments. Then, the data storage apparatus determines, based on a first storage parameter, whether the first data segment meets a storage condition. If the first storage parameter indicates that the first data segment meets the storage condition, the data storage apparatus concurrently stores the plurality of data fragments included in the first data segment. The data storage apparatus may run in a software module of the computing broker module 221 (or the data broker module 222) in the embodiment shown in FIG. 1, and the first data stream may be the data stream A in the embodiment shown in FIG. 1. The first storage parameter is determined based on a storage case of a data segment in front of the first data segment in the first data stream. When storing the data fragments included in the first data segment, the data storage apparatus may update the first storage parameter based on a storage case of the data fragments in the first data segment. For example, after receiving a data segment 1, the data storage apparatus (that is, the foregoing data storage apparatus) may simultaneously write a data fragment 1, a data fragment 2, and a data fragment 3 in the data segment 1 into a storage node 231 concurrently, and adjust the first storage parameter based on a storage case of the data fragments in the data segment 1. Similarly, after receiving a data segment 2, the data storage apparatus may simultaneously write a data fragment 4, a data fragment 5, and a data fragment 6 in the data segment 2 into a storage node 232 concurrently, and adjust the first storage parameter based on a storage case of the data fragments in the data segment 2. After receiving a data segment 3, the data storage apparatus may determine whether the first storage parameter allows the data storage apparatus to store the data segment 3 concurrently.

For example, the storage condition includes that a data segment in front of the first data segment in the data stream has been written into a storage node. If the first storage parameter indicates that the data segment 1 has been written into the storage node 231, the data storage apparatus determines that the data segment 2 meets the storage condition. The data storage apparatus simultaneously writes the data fragment 4, the data fragment 5, and the data fragment 6 in the data segment 2 into the storage node 232 concurrently, and adjusts the first storage parameter based on a storage case of the data fragments in the data segment 2. If the first storage parameter indicates that any one or more data fragments in the data segment 1 are not written into the storage node 231, the data storage apparatus determines that the data segment 2 does not meet the storage condition, and suspends writing of the data segment 2.

Alternatively, the storage condition includes that all data segments that are in front of the first data segment in the data stream and that are separated from the first data segment by at least one data segment have been written into storage nodes. If the first storage parameter indicates that the data segment 1 has been written into the storage node 231, the data storage apparatus determines that the data segment 3 meets the storage condition. The data storage apparatus simultaneously writes a data fragment 7, a data fragment 8, and a data fragment 9 in the data segment 3 into a storage node 233 concurrently, and adjusts the first storage parameter based on a storage case of the data fragments in the data segment 3. If the first storage parameter indicates that any one or more data fragments in the data segment 1 are not written into the storage node 231, the data storage apparatus determines that the data segment 3 does not meet the storage condition, and suspends writing of the data segment 3.

In this way, when the data segment meets the storage condition, the data storage apparatus may concurrently write the plurality of data fragments included in the data segment. If all the plurality of data segments meet the storage condition, the data storage apparatus may store a plurality of data fragments in the plurality of data segments concurrently. Concurrent storage of the plurality of data fragments can effectively improve a throughput of the storage system. In addition, whether the first data segment meets the storage condition is determined by using a storage case of another data segment in front of the first data segment in the data stream, so that a data hole can be avoided. Moreover, the first storage parameter is used to record a case of a stored data segment in the first data stream, and if the computing broker module is faulty, recovery may be performed based on the first storage parameter.

In an example, the data storage apparatus may be deployed on a cloud, and is configured to provide a data storage cloud service for a user 100. For example, in the application scenario shown in FIG. 1, the distributed storage system 200 may be specifically a computing device (or a computing device cluster) located in a cloud. In addition, the computing device may externally provide a client module 210, configured to implement interaction with the user 100, for example, obtain a data stream provided by the user 100. During actual application, the client module 210 may be, for example, an application running on a user-side device, or may be a network browser externally provided by a computing device. In addition, the computing device may provide a computing broker module 221 and a computing broker module 222 to implement a function of the data storage apparatus in this embodiment of this application, configured to segment and fragment a data stream received by the client module 210, and determine a storage node corresponding to a data fragment. In addition, the computing device may be a storage system. The storage system includes the storage node 231, the storage node 232, the storage node 233, and a storage node 234, configured to store data sent by the computing broker module 221 or the computing broker module 222.

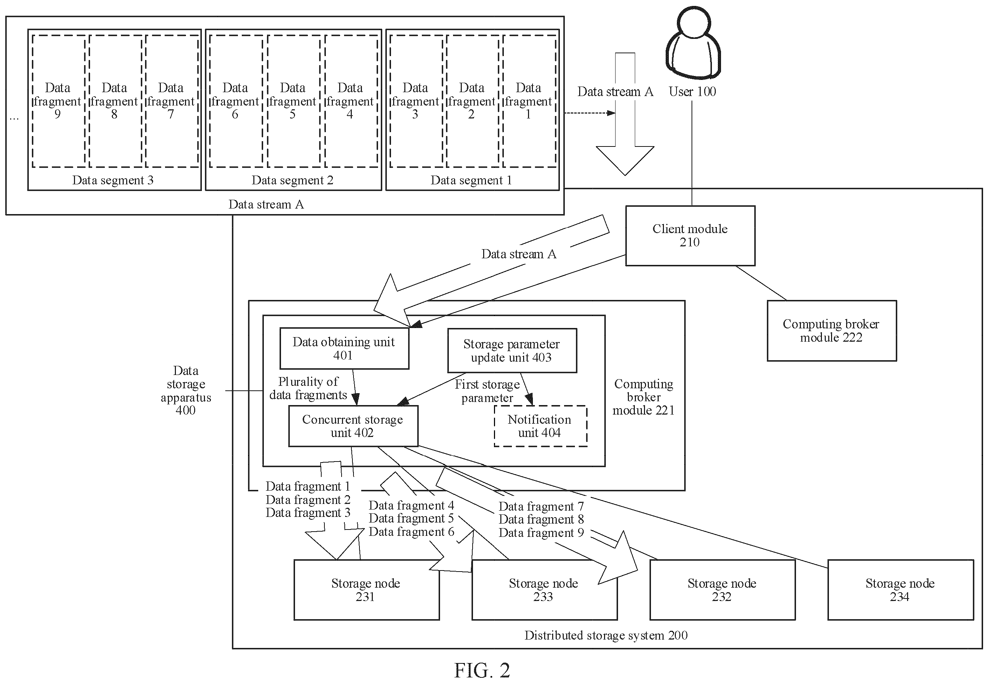

As shown in FIG. 2, a data storage apparatus 400 may include a data obtaining unit 401, a concurrent storage unit 402, and a storage parameter update unit 403. If the data storage apparatus 400 is implemented by using the computing broker module 211 or the computing broker module 222 in the embodiment shown in FIG. 1, the data obtaining unit 401 is configured to receive the first data segment in the data stream A that is sent by the user 100 by using the client module 210, and provide the first data segment to the concurrent storage unit 402. The concurrent storage unit 402 may obtain the first storage parameter from the storage parameter update unit 403, and determine, based on the first storage parameter, whether the first data segment meets the storage condition. If the first data segment meets the storage condition, the concurrent storage unit 402 concurrently stores, in the storage system, the plurality of data fragments included in the first data segment. For example, after determining that the data segment 1 meets the storage condition, the concurrent storage unit 402 simultaneously writes the data fragment 1, the data fragment 2, and the data fragment 3 in the data segment 1 into the storage node 231. After determining that the data segment 2 meets the storage condition, the concurrent storage unit 402 simultaneously writes the data fragment 4, the data fragment 5, and the data fragment 6 in the data segment 2 into the storage node 232. After determining that the data segment 3 meets the storage condition, the concurrent storage unit 402 simultaneously writes the data fragment 7, the data fragment 8, and the data fragment 9 in the data segment 3 into the storage node 233.

During actual application, the data storage apparatus 400 may be implemented by using software or hardware.

The data storage apparatus is used as an example of a software functional unit and may include code that is run on a computing instance. The computing instance may include at least one of a physical host (computing device), a virtual machine, and a container. Further, there may be one or more computing instances. For example, the data storage apparatus may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. One region may usually include a plurality of AZs.

Similarly, the plurality of hosts/virtual machines/containers configured to run the code may be distributed in a same virtual private cloud (virtual private cloud, VPC), or may be distributed in a plurality of VPCs. One VPC is usually disposed in one region. For cross-region communication between two VPCs in a same region and between VPCs in different regions, a communication gateway needs to be disposed in each VPC, and interconnection between the VPCs is implemented through the communication gateway.

The data storage apparatus is used as an example of a hardware functional unit, and the data storage apparatus may include at least one computing device such as a server. Alternatively, the data storage apparatus may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), a generic array logic (generic array logic, GAL), or any combination thereof.

A plurality of computing devices included in the data storage apparatus may be distributed in a same region, or may be distributed in different regions. The plurality of computing devices included in the data storage apparatus may be distributed in a same AZ, or may be distributed in different AZs. Similarly, the plurality of computing devices included in the data storage apparatus may be distributed in a same VPC, or may be distributed in a plurality of VPCs. The plurality of computing devices may be any combination of computing devices such as the server, the ASIC, the PLD, the CPLD, the FPGA, and the GAL.

The following describes in detail various non-limiting specific implementations of a data storage process.

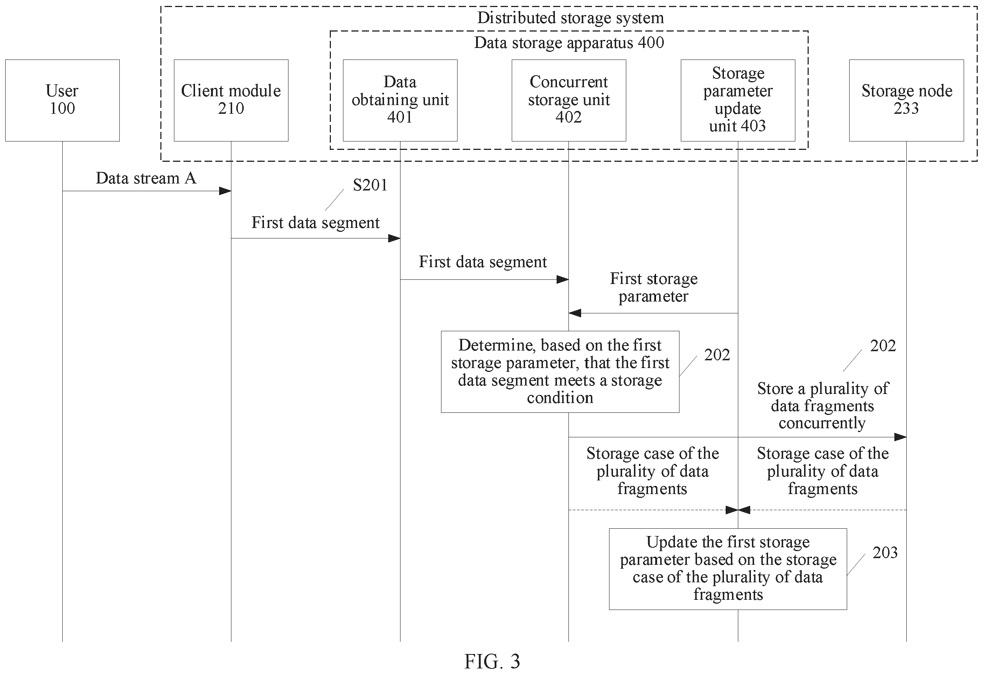

FIG. 3 is a schematic flowchart of a data storage method according to an embodiment of this application. The method may be applied to the application scenario shown in FIG. 2, or may be applied to another applicable application scenario. An example in which the method is applied to the application scenario shown in FIG. 2 and a data storage apparatus 400 is implemented by using a computing broker module 221 is used below for description. It should be noted that, in the application scenario shown in FIG. 2, the data stream A may also be referred to as a first data stream, and the data storage apparatus 400 includes a data obtaining unit 401, a concurrent storage unit 402, and a storage parameter update unit 403, and may further include a notification unit 404. In addition, for details about functions of the units, refer to related descriptions in the following embodiment.

The data storage method shown in FIG. 3 may specifically include the following steps.

S301: The data obtaining unit 401 obtains a plurality of data fragments.

The plurality of data fragments obtained by the data obtaining unit 401 belong to a first data segment in the data stream A. The data stream A is a data stream formed by data stored in a distributed storage system 200 by a user 100. The first data segment belongs to the data stream A, and may be a 1^{st} data segment in the data stream A, or may be a data segment at another location in the data stream A. In other words, the first data segment may be the data segment 1 in FIG. 2, or may be the data segment 2 or the data segment 3 in FIG. 2. The first data segment includes a plurality of data fragments. Optionally, the plurality of data fragments obtained by the data obtaining unit 401 may be all data fragments included in the first data segment, or may be some data fragments included in the first data segment. In other words, the data obtaining unit 401 may obtain all data fragments in the first data segment, or may obtain some data fragments in the first data fragment.

When obtaining the plurality of data fragments, the data obtaining unit 401 may obtain, from the user 100 by using a client module 210, the plurality of data fragments included in the first data segment. For example, the client module 210 may receive, through a network connection, to-be-stored data sent by the user 100. Limited by a network bandwidth, the to-be-stored data sent by the user 100 is received by the client module 210 in a form of a data stream. Correspondingly, the client module 210 sends the data stream to the data obtaining unit 401 of the data storage apparatus 400 in the form of the data stream.

Optionally, each time the client module 210 receives one data fragment, the client module 210 may forward the received data fragment to the data obtaining unit 401. Alternatively, after receiving a preset quantity of data fragments, the client module 210 may forward the preset quantity of received data fragments to the data obtaining unit 401.

After obtaining the plurality of data fragments, the data obtaining unit 401 may forward the plurality of data fragments to the concurrent storage unit 402. Similarly, each time the data obtaining unit 401 receives one data fragment, the data obtaining unit 401 may forward the received data fragment to the concurrent storage unit 402. Alternatively, after receiving a first quantity of data fragments, the data obtaining unit 401 may forward the first quantity of received data fragments to the concurrent storage unit 402.

S302: The concurrent storage unit 402 determines, based on a first storage parameter, whether the first data segment meets a storage condition, and if the first data segment meets the storage condition, stores the plurality of data fragments in the first data segment concurrently.

To improve a throughput of the distributed storage system 200, the concurrent storage unit 402 may store received data fragments concurrently. However, if the concurrent storage unit 402 directly stores the plurality of received data fragments concurrently, a data hole may be generated, which affects normal storage of data.

Therefore, in this embodiment of this application, the concurrent storage unit 402 may first determine whether the first data segment meets the storage condition, and then store the data fragments in the first data segment concurrently after determining that the first data segment meets the storage condition. The first storage parameter may be obtained by the concurrent storage unit 402 from the storage parameter update unit 403. The storage parameter update unit 403 is configured to update the first storage parameter based on a storage case of the data segments in the data stream A.

The following first describes the first storage parameter.

The first storage parameter indicates a case in which a data segment in the front of the data stream A is stored. The data segment in the front of the data stream A is a data segment located in front of a currently to-be-stored data segment in the data stream A. A sequence of the data segments in the data stream A may be a sequence of receiving the data segments in the data stream A by the data obtaining unit 401. In other words, when the concurrent storage unit 402 receives the data fragment in the first data segment, the first data segment is a to-be-stored data segment, and the first storage parameter is determined based on a storage case of a data segment in front of the first data segment in the data stream A.

It may be understood that, if the plurality of data fragments received by the concurrent storage unit 402 are from different data segments, the concurrent storage unit 402 may determine whether the plurality of data segments respectively corresponding to the plurality of data fragments meet the storage condition, and then concurrently store data fragments in a data segment that meets the storage condition.

In some possible implementations, the first storage parameter is determined based on a right boundary of a header continuous storage part of the data stream A. The header continuous storage part of the data stream A includes one or more continuous stored data fragments in a header of the data stream A. The right boundary of the header continuous storage part of the data stream A means a data fragment at the furthest back of the data stream A in the header continuous storage part of the data stream A.

The scenario shown in FIG. 2 is used as an example. It is assumed that a data fragment 1, a data fragment 2, a data fragment 3, a data fragment 5, and a data fragment 6 have been stored. Because a data fragment 4 is not stored, and the stored data fragment 3 and the stored data fragment 5 are discontinuous, the header continuous part of the data stream A includes the data fragment 1, the data fragment 2, and the data fragment 3, and the right boundary of the header continuous storage part of the data stream A is the data fragment 3. The first storage parameter is determined based on the data fragment 3, and indicates that the data fragment 3 has been stored. In a specific implementation, the first storage parameter may be a last add confirmed (last add confirmed, LAC) parameter of the data stream A.

It may be understood that, if a 1^{st} data fragment in the data stream A is not stored, a value of the first storage parameter may be an initial value, indicating that any data fragment in the data stream A is not stored.

The following describes a process in which the concurrent storage unit 402 determines, based on the first storage parameter, whether the first data segment meets the storage condition.

It can be learned from the foregoing descriptions that the data hole means that a part of data fragments are not stored, but a data fragment behind the part of data fragments in a data stream has been stored. Therefore, to avoid the data hole, the concurrent storage unit 402 may control that data fragments that are simultaneously stored concurrently are from one or more data segments in a limited range in the data stream A, and a data segment, in the data stream A, in front of a data segment to which a stored data fragment belongs has been stored. In this case, because a data segment in front of a to-be-stored data fragment in the data stream A has been stored, after all to-be-stored data fragments are stored in the storage node, a last to-be-stored data fragment to the 1^{st} data fragment in the data stream A are all stored in the storage node. In this way, normal storage of the data stream A can be ensured, and the data hole can be avoided.

In other words, when determining whether the first data segment meets the storage condition, the concurrent storage unit 402 may determine whether the first data segment belongs to a storage range indicated by the first data stream. If the first data segment belongs to the storage range indicated by the first data stream, it indicates that the first data segment meets the storage condition. If the first data segment does not belong to the storage range indicated by the first data stream, it indicates that if the first data segment is stored in the storage node, the data hole occurs in front of the first data segment in the data stream A.

During actual application, the concurrent storage unit 402 may have a capability of storing a plurality of data fragments from different data segments concurrently, or may not have a capability of storing a plurality of data fragments from different data segments concurrently. Correspondingly, the first data segment meets different storage conditions when a quantity of data segments from which the data fragments stored in the concurrent storage unit 402 come is different. The following provides separate descriptions.

In a first possible implementation, the concurrent storage unit 402 stores a plurality of data fragments from a same data segment concurrently, and does not have a capability of storing a plurality of data fragments from different data segments concurrently.

In this way, after the plurality of data fragments from the first data segment are received, if a data segment in front of the first data segment is not stored, and the concurrent storage unit 402 writes any data fragment in the first data segment into the storage node, the data hole occurs at a location in front of the first data segment in the data stream A.

Therefore, to avoid the data hole, the storage condition that needs to be met for storing the first data segment includes: The data segment in front of the first data segment in the data stream A has been stored. In this way, if the first data segment meets the storage condition, after the concurrent storage unit 402 writes the plurality of data fragments included in the first data segment into the storage node, all data segments in front of the first data segment in the data stream A are written into the storage node, the first data segment is also written into the storage node, and no data hole exists in the data stream A.

When determining, based on the first storage parameter, whether the first data segment meets the storage condition, the concurrent storage unit 402 may determine, based on the first storage parameter, whether all the data segments in front of the first data segment in the data stream A have been stored. It can be learned from the foregoing descriptions that the first storage parameter may be determined based on the right boundary of the header continuous storage part of the data stream A. Correspondingly, the concurrent storage unit 402 may determine, based on the first storage parameter, whether the right boundary of the header continuous storage part is adjacent to the first data segment, or whether the right boundary is in the first data segment.

If the right boundary of the header continuous storage part of the data stream A is adjacent to the first data segment, it indicates that all the data fragments in front of the first data segment in the data stream A have been stored. In this case, the first data segment meets the storage condition. If the right boundary of the header continuous storage part of the data stream A is in the first data segment, it indicates that all the data fragments in front of the first data segment in the data stream A have been stored, and a part of data fragments in the first data segment also have been stored. In this case, the first data segment meets the storage condition. If the right boundary of the header continuous storage part of the data stream A is not adjacent to the first data segment and does not belong to the first data segment, it indicates that an unstored data fragment is in front of the first data segment, and the first data segment does not meet the storage condition.

It may be understood that, when the data fragments in the first data segment are stored concurrently, if the concurrent storage unit 402 receives data fragments from another data segment, the concurrent storage unit 402 may suspend these data fragments, and store the data fragments after all the data fragments in the first data segment have been stored.

In a second possible implementation, the concurrent storage unit 402 has a capability of storing a plurality of data fragments from different data segments concurrently.

In this way, if the data segment in front of the first data segment in the data stream A is not stored, but the unstored data segment is a data segment that is being stored or can be stored in the concurrent storage unit 402, even if the concurrent storage unit 402 stores a data fragment in the first data segment, because the unstored data segment can still be stored in the concurrent storage unit 402, no data hole occurs in the data stream A, and normal storage of the data stream A is not affected.

In this embodiment of this application, a maximum quantity of data segments that can be stored concurrently by the concurrent storage unit 402 may be referred to as a preset quantity. In other words, a quantity of data segments to which the plurality of data fragments that can be simultaneously stored concurrently in the concurrent storage unit 402 belong does not exceed the preset quantity.

Correspondingly, when determining, based on the first storage parameter, whether the first data segment meets the storage condition, the concurrent storage unit 402 may first determine a second data segment based on the first data segment and the preset quantity, and then determine whether a right boundary indicated by the first storage parameter is a last data segment in the second data segment or is behind the second data segment.

The second data segment is in front of the first data segment in the data stream A, and a quantity of data segments between the first data segment and the second data segment in the data stream A is less than the preset quantity. An example is used for description. Assuming that the concurrent storage unit 402 may store data fragments from a maximum of two data segments concurrently (that is, the preset quantity is 2), the quantity of data segments between the first data segment and the second data segment in the data stream A is less than 2. In other words, there is at most one data segment between the first data segment and the first data segment in the first data stream A. With reference to the application scenario shown in FIG. 2 for description, if the first data segment is the data segment 3 in the embodiment shown in FIG. 2, and the preset quantity is 2, the second data segment is the data segment 1 in the embodiment shown in FIG. 2, and there is one data segment (that is, the data segment 2) between the first data segment and the second data segment in the data stream A, which is less than the preset quantity.

If the right boundary indicated by the first storage parameter is the last data segment in the second data segment, it indicates that the second data segment belongs to the header continuous storage part of the data stream A, and the second data segment and a data segment in front of the second data segment have been stored, the first data segment meets the storage condition. If the right boundary indicated by the first storage parameter is behind the second data segment, it indicates that the second data segment and a data segment in front of the second data segment have been stored, and the first data segment meets the storage condition. If the right boundary of the header continuous storage part of the data stream A is in front of the last data segment in the second data segment, it indicates that there is an unstored data fragment in the second data segment, or an unstored data fragment the second data segment, and the first data segment does not meet the storage condition.

If the first data segment does not meet the storage condition, the concurrent storage unit 402 temporarily does not store the data fragments in the first data segment. If the first data segment meets the storage condition, the concurrent storage unit 402 stores the plurality of data fragments in the first data segment concurrently.

The following describes a method used by the concurrent storage unit 402 to store a plurality of data fragments concurrently. Optionally, the plurality of data fragments include the plurality of data fragments obtained in step S301, and may also include a data fragment of another data segment other than the first data segment.

In this embodiment, concurrent storage means storing a plurality of data fragments simultaneously. This embodiment of this application provides the following two possible implementations.

In a first implementation, the concurrent storage unit 402 may store the plurality of data segments concurrently to one storage node. In a specific implementation, the concurrent storage unit 402 may first determine a storage node corresponding to the first data segment, and then create a plurality of storage threads on the storage node. Each storage thread is used to write one data fragment into the storage node. In this way, the plurality of storage threads are executed concurrently, to implement concurrent storage of the plurality of data fragments.

The application scenario shown in FIG. 2 is used as an example for description. It is assumed that the first data segment is the data segment 1 in the data stream A. After determining that the data segment 1 meets the storage condition, the concurrent storage unit 402 may create a storage thread 1, a storage thread 2, and a storage thread 3 on the storage node 231. The storage thread 1 is used to write the data fragment 1 into the storage node 231, the storage thread 2 is used to write the data fragment 2 into the storage node 231, and the storage thread 3 is used to write the data fragment 3 into the storage node 231. In this way, the storage thread 1, the storage thread 2, and the storage thread 3 are executed concurrently, to implement concurrent storage of the data fragment 1, the data fragment 2, and the data fragment 3.

In a second implementation, the concurrent storage unit 402 may store the plurality of data segments in a plurality of storage nodes concurrently. In a specific implementation, the concurrent storage unit may first determine a storage node corresponding to each of the plurality of data fragments, then create a storage thread on the storage node corresponding to each data fragment, and store the plurality of data fragments by using the plurality of storage threads respectively, to implement concurrent storage of the data fragments.

The network architecture shown in FIG. 2 is used as an example for description. It is assumed that the concurrent storage unit determines that the data segment 2 meets the storage condition, the data fragment 4 corresponds to the storage node 231, the data fragment 5 corresponds to the storage node 232, and the data fragment 6 corresponds to the storage node 233. In this case, the concurrent storage unit 402 may create a storage thread 4 on the storage node 231, create a storage thread 5 on the storage node 232, and create a storage thread 6 on the storage node 233. The storage thread 4 is used to write the data fragment 5 into the storage node 231, the storage thread 5 is used to write the data fragment 5 into the storage node 232, and the storage thread 6 is used to write the data fragment 6 into the storage node 233. In this way, the storage thread 4, the storage thread 5, and the storage thread 6 are executed concurrently, to implement concurrent storage of the data fragment 4, the data fragment 6, and the data fragment 5.

It may be understood that the foregoing two implementations may be used together. For example, in some possible implementations, the concurrent storage unit 402 may store the data fragment 1 and the data fragment 2 in the storage node 231 by using two storage threads that run concurrently, and store the data fragment 3 in the storage node 232.

In some possible implementations, the concurrent storage unit 402 may generate an identifier of a data fragment before storing the data fragment. The identifier of the data fragment uniquely identifies the data fragment. After completing writing of the data fragment, the storage node may record the identifier of the data fragment, to recover data when the computing broker module 221 is faulty. Optionally, the identifier of the data fragment includes an identifier of a data stream to which the data fragment belongs, an identifier of a data segment to which the data fragment belongs, and an identifier of the data fragment in the data segment. For example, an identifier of a data fragment in the first data segment may include an identifier of the data stream A, a sequence number of the first data segment in the data stream A, and a sequence number of the data fragment in the first data segment. For descriptions of this part of content, refer to the following. Details are not described herein again.

S303: The storage parameter update unit 403 updates the first storage parameter based on a storage case of the plurality of data fragments.

In a specific implementation, after writing the data fragment, the concurrent storage unit 402 (or the storage node) may send a storage case of the data fragment to the storage parameter update unit 403. The storage parameter update unit 403 updates the first storage parameter based on the storage case of the data fragment.

The storage case of the data fragment may be represented by an identifier of the data fragment. In a specific implementation, after completing writing of the data fragment, the concurrent storage unit 402 (or the storage node that stores the data fragment) may send the identifier of the data fragment to the storage parameter update unit 403. After receiving the identifier of the data fragment, the storage parameter update unit 403 may determine that the data fragment corresponding to the identifier has been stored, and update the first storage parameter accordingly.

It can be learned from the foregoing descriptions that the first storage parameter may be determined based on the right boundary of the header continuous storage part of the data stream A. Correspondingly, when updating the first storage parameter, the storage parameter update unit 403 may determine, based on the storage case of the data fragment, whether the right boundary of the header continuous storage part changes. If the right boundary of the header continuous storage part changes, the storage parameter update unit 403 adjusts the first storage parameter based on a changed right boundary of the header continuous storage part. If the right boundary of the header continuous storage part does not change, the storage parameter update unit 403 may not adjust the first storage parameter.

The application scenario shown in FIG. 2 is used as an example for description. It is assumed that the first data segment is the data segment 3 in the data stream A, and the data segment 1 and the data segment 2 have been stored. The concurrent storage unit 402 determines, based on a storage case of the storage thread 7, the storage thread 8, and the storage thread 9 by using a storage thread 7, a storage thread 8, and a storage thread 9 respectively, whether to update the first storage parameter. Because the data fragment 7 and the data fragment 8 are not stored, and the data stream A and the data fragment 9 are stored in the storage node 233, if the concurrent storage unit 402 detects that execution of the storage thread 9 is completed, it indicates that the data fragment 9 has been written, and the concurrent storage unit 402 sends an identifier of the data fragment 9 to the storage parameter update unit 403. The storage parameter update unit 403 determines, based on the identifier of the data fragment 9, that the data fragment 9 has been stored. Then, the storage parameter update unit 403 does not update the first storage parameter based on that a right boundary of a header continuous storage part of a data fragment in front of the data fragment 9 in the data stream A is not extended to the data fragment 9.

If the concurrent storage unit 402 detects that execution of the storage thread 7 is completed, it indicates that the data fragment 7 has been written, and the concurrent storage unit 402 sends an identifier of the data fragment 7 to the storage parameter update unit 403. The storage parameter update unit 403 determines, based on the identifier of the data fragment 7, that the data fragment 7 has been stored. Then, the storage parameter update unit 403 determines, based on a storage case of a data fragment in front of the data fragment 7 in the data stream A, whether to update the first storage parameter. Because the data fragments in the data segment 1 and the data segment 2 have been stored, and the right boundary of the header continuous storage part of the data stream A is extended to the data fragment 7, the storage parameter update unit 403 updates the first storage parameter based on the identifier of the data fragment 7. An updated first storage parameter indicates that the data fragment 7 and a data fragment in front of the data fragment 7 in the data stream A have been stored.

After the first storage parameter is updated, the notification unit 404 in the data storage apparatus 400 may generate a notification message based on the updated first storage parameter, and send the notification message to the client module 210, so that the client module 210 displays the notification message to the user 100. The notification message indicates that the data fragments in the first data segment have been stored. In a specific implementation, the notification unit 404 may generate the notification message after the first storage parameter indicates that all the data fragments in the first data segment are stored. The notification message is used to notify the user that the first data segment and data in front of the first data segment in the data stream A have been stored.

In the foregoing descriptions, the first storage parameter is used to determine whether the first data segment meets the storage condition. In a specific implementation, the first storage parameter may be used to determine whether any data segment in the data stream A meets the storage condition. For example, for an implementation in which the concurrent storage unit 402 may store data fragments in a preset quantity of data segments concurrently, if storage of each data fragment in the first data segment is completed, the concurrent storage unit 402 may determine, based on the updated first storage parameter, that meets the storage condition. The third data segment is behind the first data segment in the data stream A, and a quantity of data segments between the first data segment and the third data segment is less than the preset quantity.

During actual application, the data storage apparatus 400 or the computing broker module 221 in which the data storage apparatus 400 runs may be faulty. If the data storage apparatus 400 or the computing broker module 221 is faulty, storage of the data stream A cannot continue. In this way, to ensure normal storage of the data stream A, storage of the data stream A may be completed by using another computing broker module (for example, a computing broker module 222) in the distributed storage system 200.

A new computing broker module configured to store the data stream A may alternatively store the data stream A from the beginning. Alternatively, to improve storage efficiency, if a part of data in the data stream A has been stored in the storage node by the data storage apparatus 400, the new computing broker module configured to store the data stream A may recover the first storage parameter based on a storage case of each data fragment in the data stream A, and re-store the data stream A based on this.

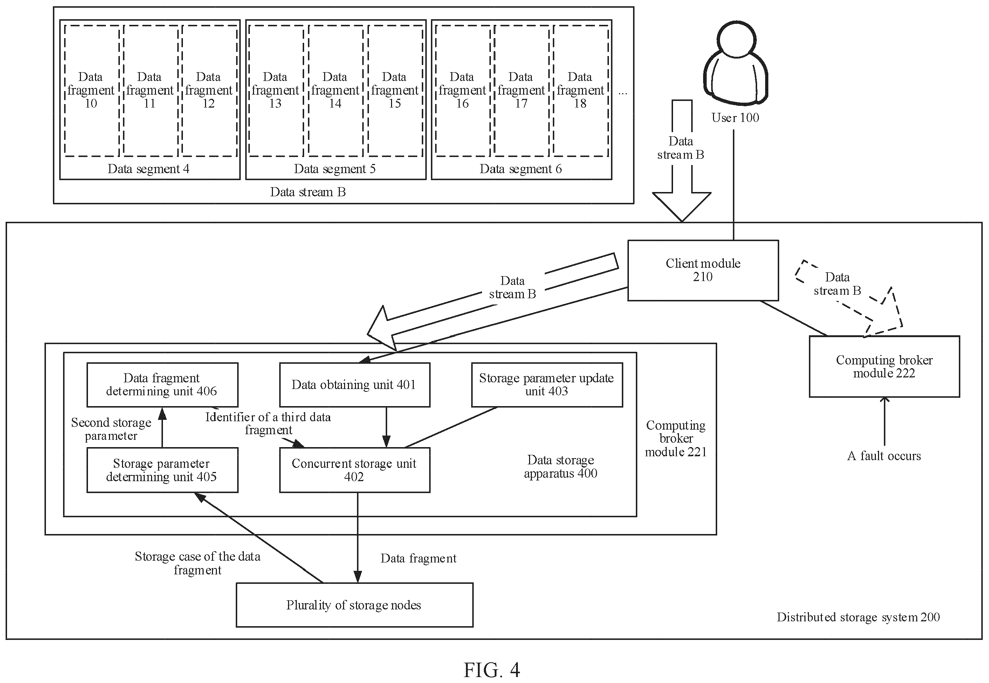

As shown in FIG. 4, based on the application scenario shown in FIG. 2, it is assumed that the computing broker module 222 is configured to store a data stream B to a plurality of storage nodes (the plurality of storage nodes may include the storage node 231, the storage node 232, the storage node 233, and the storage node 234). After the computing broker module 222 is faulty, the data storage apparatus 400 in the computing broker module 221 is responsible for storing the data stream B. The data stream B may also be referred to as a second data stream, and includes a data segment 4, a data segment 5, and a data segment 6. The data segment 4 includes a data fragment 10, a data fragment 11, and a data fragment 12, the data fragment 5 includes a data fragment 13, a data fragment 14, and a data fragment 15, and the data segment 6 includes a data fragment 16, a data fragment 17, and a data fragment 18.

Based on the structure shown in FIG. 2, the data storage apparatus 400 further includes a storage parameter determining unit 405 and a data fragment determining unit 406. The storage parameter determining unit 405 may obtain a storage case of data fragments in the data stream B from the plurality of storage nodes, and determine a second storage parameter based on this. Then, the storage parameter determining unit 405 sends the second storage parameter to the data fragment determining unit 406. The data fragment determining unit 406 determines a third data fragment based on the second storage parameter, and sends an identifier of the third data fragment to the concurrent storage unit 402. The concurrent storage unit 402 concurrently stores a plurality of unstored data fragments in the data stream B in the plurality of storage nodes based on the identifier of the third data fragment and a plurality of data fragments in the data stream B sent by the data obtaining unit 401. The second storage parameter indicates a case in which a data segment in the front of the data stream B is stored. The third data fragment is a 1^{st} unstored data fragment in the data stream B. Data fragments stored concurrently by the concurrent storage unit 402 include the third data fragment and one or more data fragments behind the third data fragment in the data stream B.

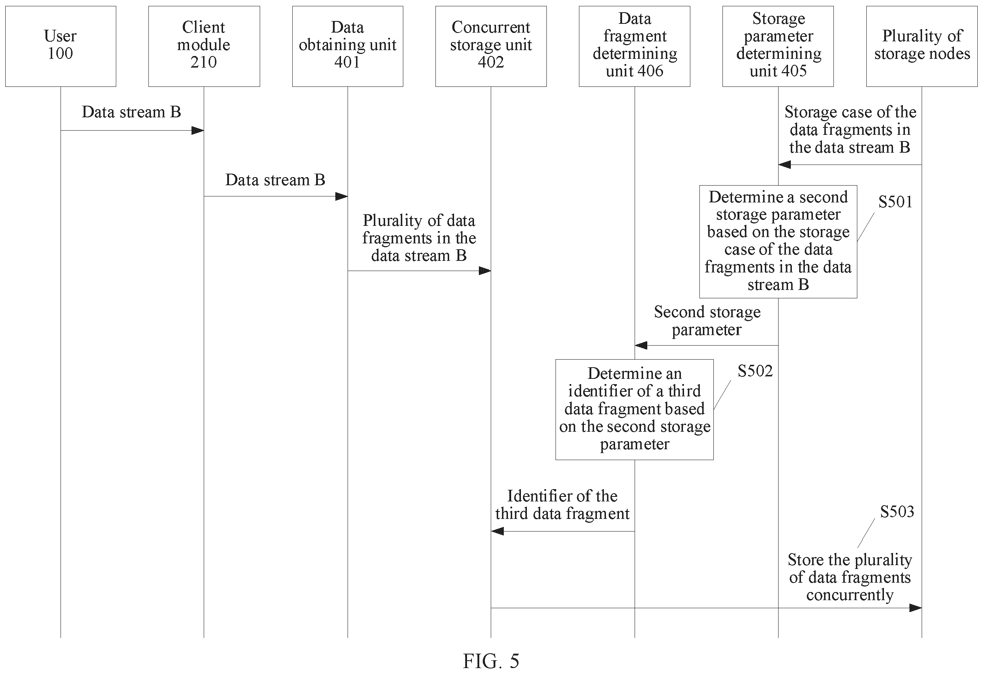

FIG. 5 is another schematic flowchart of a data storage method according to an embodiment of this application. The method may be applied to the application scenario shown in FIG. 4, or may be applied to another applicable application scenario. An example in which the method is applied to the application scenario shown in FIG. 4 and a data storage apparatus 400 is implemented by using a computing broker module 221 is used below for description. It should be noted that, in the application scenario shown in FIG. 4, a data obtaining unit 401, a concurrent storage unit 402, and a storage parameter update unit 403 may implement the functions in the embodiment shown in FIG. 5, or may implement the functions in the embodiment shown in FIG. 3. In addition, for details about functions of the units, refer to related descriptions in the following embodiment.

The data storage method shown in FIG. 5 may specifically include the following steps.

S501: In response to a fault occurring on a computing broker module 222, a storage parameter determining unit 405 determines a second storage parameter based on a storage case of data fragments in a data stream B.

If the computing broker module 222 is faulty, a storage task hosted by the computing broker module 222 cannot continue to be completed. To ensure normal storage of data, another module configured to allocate a storage task in a client module 210 or a distributed storage system 220 may indicate the data storage apparatus 400 in the computing broker module 221 to complete storage of the data stream B.

In this embodiment, to improve utilization of storage space, the data storage apparatus 400 may store the data stream B based on that the computing broker module 222 has completed storage of a part. In other words, the data storage apparatus 400 does not re-store a part of data fragments that have been stored in the data stream B. Therefore, to determine specific data fragments that have been stored in the data stream B, the data storage apparatus 400 may determine the second storage parameter corresponding to the data stream B.

The storage parameter determining unit 405 in the data storage apparatus 400 may obtain the storage case of the data fragments in the data stream B from a plurality of storage nodes in the distributed storage system 200, and determine the second storage parameter based on the storage case of the data fragments in the data stream B.

First, a method used by the storage parameter determining unit 405 to obtain the storage case of the data fragments in the data stream B is described.

In this embodiment, the storage parameter determining unit 405 may query, through an interface provided by the storage node, whether each data fragment in the data stream B is stored in the storage node. In a specific implementation, the storage parameter determining unit 405 may generate a query request based on an identifier of the data stream B, and then send the query request to one or more storage nodes in the storage system. After receiving the query request, the storage node may determine, based on the identifier that is of the data stream B and that is included in the query request, whether a stored data fragment in the data stream B exists locally. If the stored data fragment in the data stream B exists locally, the storage node may generate an identifier set based on locally stored identifiers of data fragments in a second data stream, and send the identifier set to the storage parameter determining unit 405. In this way, the storage parameter determining unit 405 may determine, based on the identifier set returned by the storage node, specific data fragments that have been stored in the data stream B, to obtain the storage case of the data fragments in the data stream B.

It can be learned from the foregoing descriptions that an identifier of a data fragment in the data stream B may include the identifier of the data stream B, an identifier of a data segment to which the data fragment belongs, and an identifier of the data fragment in the data segment. Correspondingly, when the storage case of the data fragments in the data stream B is obtained, to more conveniently determine the data segment to which the data fragment belongs, the storage parameter determining unit 405 may generate a plurality of query requests, where each query request is used to query a storage case of data fragments in one data segment in the data stream B. For example, for a data segment 4 in the data stream B, the storage parameter determining unit 405 may generate a first query request, where the first query request includes the identifier of the data stream B and an identifier of the data segment 4, and is used to query a storage case of each data fragment in the data segment 4 in the storage node.

The following describes a method used by the storage parameter determining unit 405 to determine the second storage parameter based on the storage case of the data fragments in the data stream B.

Similar to a first storage parameter, the second storage parameter indicates a case in which a data segment in the front of the data stream B is stored, for example, may be determined based on a right boundary of a header continuous storage part of the data stream B. During actual application, after obtaining the storage situation of the data fragments in the data stream B, the storage parameter determining unit 405 may determine, based on this, whether a plurality of data fragments in a header of the data stream B have been stored, to determine the header continuous storage part of the data stream B, and determine the second storage parameter based on the header continuous storage part of the data stream B.

Descriptions are provided with reference to the application scenario shown in FIG. 4. The storage parameter determining unit 405 determines, by sending the query request to the plurality of storage nodes, that a data fragment 10, a data fragment 11, a data fragment 12, a data fragment 13, and a data fragment 15 in the data stream B have been stored in the storage node and another data fragment in the data stream B is not stored. Because a data fragment 14 is not stored, the storage parameter determining unit 405 determines that the header continuous storage part of the data stream B is the data fragment 10 to the data fragment 13. The right boundary of the header continuous storage part of the data stream B is the data fragment 13. The storage parameter determining unit 405 determines the second storage parameter based on the data fragment 13.

After determining the second storage parameter, the storage parameter determining unit 405 may send the second storage parameter to a data fragment determining unit 406.

S502: The data fragment determining unit 406 determines an identifier of a third data fragment based on the second storage parameter.

After receiving the second storage parameter sent by the storage parameter determining unit 405, the data fragment determining unit 406 may determine the identifier of the third data fragment based on the second storage parameter. The third data fragment is a data fragment that is not stored in the storage node in the data stream B, and any data fragment in front of the third data fragment in the data stream B has been stored. In this way, storage starts from the third data fragment, so that each data fragment in the data stream B can be stored, to avoid a data hole in the data stream B.

The foregoing example is still used for description, that is, the second storage parameter is determined based on an identifier of the data fragment 13. After receiving the second storage parameter sent by the storage parameter determining unit 405, the data fragment determining unit 406 may determine a 1^{st} data fragment behind the header continuous storage part of the data stream B as the third data fragment based on the second storage parameter. In other words, the third data fragment is the data fragment 14 in the data stream B.

After determining the third data fragment, the data fragment determining unit 406 may send the identifier of the third data fragment to the concurrent storage unit 402.

S503: The concurrent storage unit 402 stores the third data fragment and a data fragment behind the third data fragment in the data stream B in the plurality of storage nodes concurrently.

After obtaining the identifier of the third data fragment, the concurrent storage unit 402 may store the third data fragment and a data fragment behind the third data fragment in the data stream B in the plurality of storage nodes concurrently. In a specific implementation, the concurrent storage unit 402 may use a method similar to that described in S302 to determine, based on the second storage parameter, whether a plurality of data segments in the data stream B meet a storage condition, and then concurrently store a plurality of data fragments included in the data segments after determining that the data segments meet the storage condition. In this way, because the data fragment in front of the third data fragment belongs to the header continuous storage part of the data stream B, remaining data fragments in the data stream B are stored concurrently by using the method described in S302, so that a data segment to which a data fragment stored each time belongs meets the storage condition, to avoid the data hole in the data stream B.

It may be understood that, even if a part of data fragments behind the third data fragment in the data stream B have been stored in the data node before the computing broker module 222 is faulty, the concurrent storage unit 402 may still store these data fragments, to avoid the data hole.

It should be noted that, in this embodiment of this application, division and function descriptions of units in the data storage apparatus are merely used as an example. For example, in another embodiment, the data obtaining unit 401 may be configured to perform any step in the foregoing data storage method. Similarly, the concurrent storage unit 402, the storage parameter update unit 403, the notification unit 404, the storage parameter determining unit 405, and the data fragment determining unit 406 may all be configured to perform any step in the foregoing data storage method. In addition, the step implemented by the concurrent storage unit 402, the storage parameter update unit 403, the notification unit 404, the storage parameter determining unit 405, and the data fragment determining unit 406 may be specified as required. The concurrent storage unit 402, the storage parameter update unit 403, the notification unit 404, the storage parameter determining unit 405, and the data fragment determining unit 406 respectively implement different steps in the data storage method to implement functions of the data storage apparatus.

In the embodiment shown in FIG. 3 or FIG. 5, the data storage apparatus (including the data obtaining unit 401, the concurrent storage unit 402, the storage parameter update unit 403, the notification unit 404, the storage parameter determining unit 405, and the data fragment determining unit 406) in the data storage process may be software configured on the computing device or the computing device cluster, and the software is run on the computing device or the computing device cluster, so that the computing device or the computing device cluster can implement the functions of the data storage apparatus. The following describes in detail the data storage apparatus in the data storage process from a perspective of hardware device implementation.

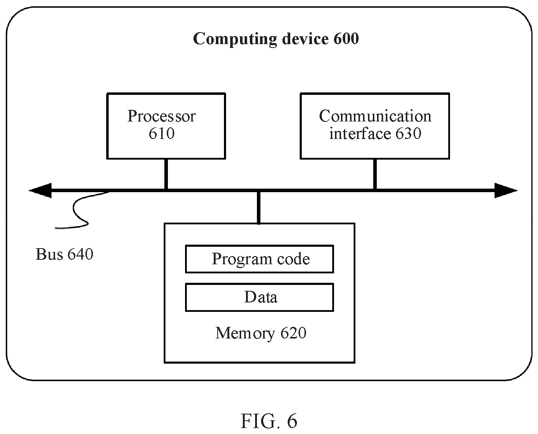

FIG. 6 is a diagram of a structure of a computing device. The foregoing data storage apparatus may be deployed on the computing device. The computing device may be a computing device (for example, a server) in a cloud environment, a computing device in an edge environment, a terminal device, or the like, and may be specifically configured to implement functions of the data obtaining unit 401, the concurrent storage unit 402, the storage parameter update unit 403, and the notification unit 404 in the embodiment shown in FIG. 3, or configured to implement functions of the data obtaining unit 401, the concurrent storage unit 402, the storage parameter update unit 403, the storage parameter determining unit 405, and the data fragment determining unit 406 in the embodiment shown in FIG. 5.

As shown in FIG. 6, the computing device 600 includes a processor 610, a memory 620, a communication interface 630, and a bus 640. The processor 610, the memory 620, and the communication interface 630 communicate with each other through the bus 640. The bus 640 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is for representing the bus in FIG. 6, but this does not mean that there is only one bus or only one type of bus. The communication interface 630 is configured to communicate with the outside, for example, receive raw data provided by a user and a to-be-trained feature extraction network model.

The processor 610 may be a central processing unit (central processing unit, CPU), an application-specific integrated circuit (application-specific integrated circuit, ASIC), a graphics processing unit (graphics processing unit, GPU), or one or more integrated circuits. The processor 610 may alternatively be an integrated circuit chip and has a signal processing capability. In an implementation process, functions of the units in the data storage apparatus may be completed by using an integrated logic circuit of hardware in the processor 610, or by using instructions in a form of software. The processor 610 may alternatively be a general-purpose processor, a data signal processor (digital signal processor, DSP), a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like. The method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 620. The processor 610 reads information in the memory 620, and completes some or all functions of the data storage apparatus in combination with hardware of the processor 610.

The memory 620 may include a volatile memory (volatile memory), for example, a random access memory (random access memory, RAM). The memory 620 may further include a non-volatile memory (non-volatile memory), for example, a read-only memory (read-only memory, ROM), a flash memory, an HDD, or an SSD.

The memory 620 stores executable code, and the processor 610 executes the executable code to perform the method performed by the foregoing data storage apparatus.

Specifically, when the embodiment shown in FIG. 3 is implemented, and the data obtaining unit 401, the concurrent storage unit 402, the storage parameter update unit 403, and the notification unit 404 described in the embodiment shown in FIG. 3 are implemented by using software, software or program code required for performing functions of the data obtaining unit 401, the concurrent storage unit 402, the storage parameter update unit 403, and the notification unit 404 in FIG. 3 is stored in the memory 620, and interaction between the client module 210 and another device is implemented through the communication interface 630, and the processor is configured to execute the instructions in the memory 620, to implement the method performed by the data storage apparatus. When the embodiment shown in FIG. 5 is implemented, and the data obtaining unit 401, the concurrent storage unit 402, the storage parameter update unit 403, the storage parameter determining unit 405, and the data fragment determining unit 406 described in the embodiment shown in FIG. 5 are implemented by using software, software or program code required for performing functions of the data obtaining unit 401, the concurrent storage unit 402, the storage parameter update unit 403, the storage parameter determining unit 405, and the data fragment determining unit 406 in FIG. 5 is stored in the memory 620, interaction between the client module 210 and another device is implemented through the communication interface 630, and the processor is configured to execute the instructions in the memory 620, to implement the method performed by the data storage apparatus.

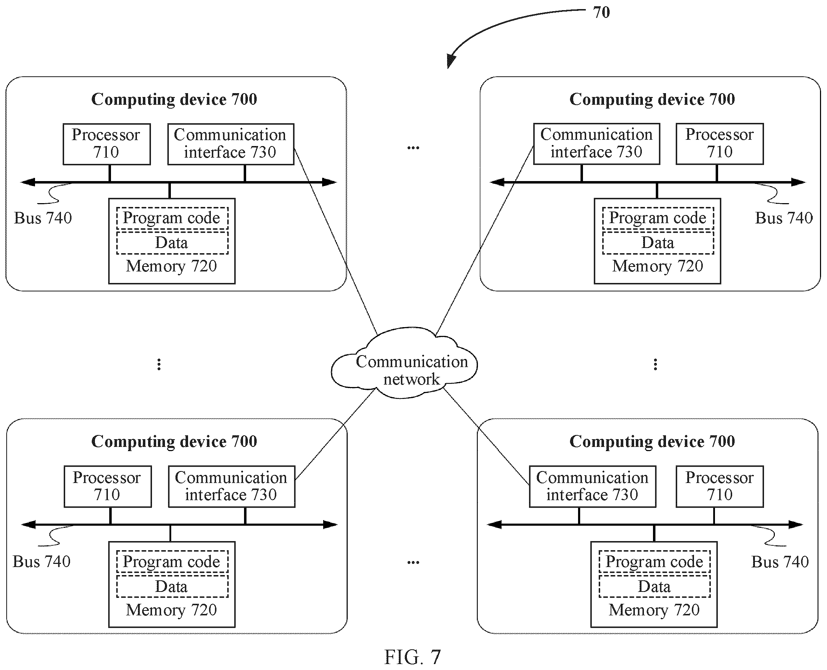

FIG. 7 is a diagram of a structure of a computing device cluster. The computing device cluster 70 shown in FIG. 7 includes a plurality of computing devices, and the foregoing data storage apparatus may be deployed on the plurality of computing devices in the computing device cluster 70 in a distributed manner. As shown in FIG. 7, the computing device cluster 70 includes the plurality of computing devices 700, and each computing device 700 includes a memory 720, a processor 710, a communication interface 730, and a bus 740. The memory 720, the processor 710, and the communication interface 730 implement communication connections to each other through the bus 740.

The processor 710 may be a CPU, a GPU, an ASIC, or one or more integrated circuits. The processor 710 may alternatively be an integrated circuit chip and has a signal processing capability. In an implementation process, some functions of the data storage apparatus may be completed by using an integrated logic circuit of hardware in the processor 710, or by using instructions in a form of software. The processor 710 may alternatively be a DSP, an FPGA, a general-purpose processor, another programmable logic device, a discrete gate or transistor logic device, or a discrete hardware component, and may implement or perform some of methods, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 720. In each computing device 700, the processor 710 reads information in the memory 720, and may complete some functions of the data storage apparatus in combination with hardware of the processor 710.

The memory 720 may include a ROM, a RAM, a static storage device, a dynamic storage device, a hard disk (for example, an SSD or an HDD), and the like. The memory 720 may store program code, for example, a part or all of program code used to implement the data obtaining unit 401, a part or all of program code used to implement the concurrent storage unit 402, a part or all of program code used to implement the storage parameter update unit 403, a part or all of program code used to implement the notification unit 404, a part or all of program code used to implement the storage parameter determining unit 405, and a part or all of program code used to implement the data fragment determining unit 406. For each computing device 700, when the program code stored in the memory 720 is executed by the processor 710, the processor 710 performs, based on the communication interface 730, some methods performed by the data storage apparatus. For example, some computing devices 700 may be configured to perform the methods performed by the data obtaining unit 401, the concurrent storage unit 402, the storage parameter update unit 403, and the notification unit, and the other computing devices 700 are configured to perform the methods performed by the storage parameter determining unit 405 and the data fragment determining unit 406. The memory 720 may further store data, for example, intermediate data or result data generated by the processor 710 in an execution process, for example, the foregoing first storage parameter.

The communication interface 703 in each computing device 700 is configured to communicate with the outside, for example, interact with another computing device 700.

The bus 740 may be a peripheral component interconnect bus, an extended industry standard architecture bus, or the like. For ease of representation, the bus 740 in each computing device 700 in FIG. 7 is represented by using only one thick line, but this does not mean that there is only one bus or only one type of bus.

A communication path is established between the plurality of computing devices 700 by using a communication network, to implement a function of the data storage apparatus. Any computing device may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the method performed by each unit of the data storage apparatus in the foregoing embodiments.

In addition, an embodiment of this application further provides a computer program product. When the computer program product is executed by one or more computing devices, the one or more computing devices perform any method in the data storage methods. The computer program product may be a software installation package. When any one of the foregoing data storage methods needs to be used, the computer program product may be downloaded, and the computer program product may be executed on the computer.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. **In** addition, in the accompanying drawings of the apparatus embodiments provided in this application, connection relationships between units indicate that the units have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented through corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data storage method, wherein the method is applied to a computing broker module (221) in a distributed storage system (200), and the method comprises:
obtaining (S301) a plurality of data fragments, wherein the plurality of data fragments belong to a first data segment in a first data stream;
in response to a first storage parameter indicating that the first data segment meets a storage condition, storing (S302) the plurality of data fragments concurrently in the distributed storage system (200), wherein the first storage parameter is determined based on a storage case of a data segment in front of the first data segment in the first data stream, and the distributed storage system (200) comprises a plurality of storage nodes; and
updating (S303) the first storage parameter based on a storage case of the plurality of data fragments.

2. The method according to claim 1, wherein the plurality of data fragments comprise a first data fragment and a second data fragment, the distributed storage system (200) comprises a first storage node (231) and a second storage node (232), and the storing the plurality of data fragments concurrently in the distributed storage system (200) comprises:
sending the first data fragment and the second data fragment to the first storage node (231), wherein a thread used to store the first data fragment and a thread used to store the second data fragment are different and are executed concurrently on the first storage node (231); or
sending the first data fragment to the first storage node (231), and sending the second data fragment to the second storage node (232).

3. The method according to claim 1 or 2, wherein the method further comprises:
in response to the first storage parameter indicating that a data segment in front of a second data segment in the first data stream has been stored in the distributed storage system (200), determining that the first data segment meets the storage condition, wherein
the second data segment is a data segment in front of the first data segment in the first data stream, and a quantity of data segments between the second data segment and the first data segment in the first data stream is less than a preset quantity.

4. The method according to claim 3, wherein the updating the first storage parameter based on a storage case of the data fragments in the first data segment comprises:
in response to that the data segment in front of the first data segment in the first data stream has been stored in the distributed storage system (200) and any data fragment in the first data segment has been stored in the distributed storage system (200), adjusting the first storage parameter, so that the first storage parameter indicates that a third data segment meets the storage condition, wherein
the third data segment is a data segment behind the first data segment in the first data stream, and a quantity of data segments between the first data segment and the third data segment in the first data stream is less than the preset quantity.

5. The method according to claim 4, wherein the first data stream is sent by a client module (210), and after the adjusting the first storage parameter, the method further comprises:
generating a notification message based on the first storage parameter, wherein the notification message indicates that the data fragments in the first data segment have been stored in the distributed storage system (200); and
sending the notification message to the client module (210).

6. The method according to any one of claims 1 to 5, wherein the method further comprises:
in response to a fault occurring on a second computing broker module (222), determining a second storage parameter, wherein the second storage parameter indicates a case in which a data segment in a second data stream is stored in the distributed storage system (200), and the second computing broker module (222) is configured to store the second data stream in the distributed storage system (200);
determining (S502) an identifier of a third data fragment based on the second storage parameter, wherein the third data fragment belongs to the second data stream, and a data fragment in front of the third data fragment in the second data stream has been stored in the distributed storage system (200) by the second computing broker module (222); and
storing (S503) the third data fragment and a data fragment behind the third data fragment in the second data stream in the distributed storage system (200) based on the second storage parameter.

7. The method according to claim 6, wherein the determining a second storage parameter comprises:
sending a query request to the plurality of storage nodes, wherein the query request comprises an identifier of the second data stream;
obtaining identifier sets reported by the plurality of storage nodes, wherein the plurality of storage nodes comprise a third storage node, and an identifier set reported by the third storage node comprises identifiers that are of data fragments in the second data stream and that are stored in the third storage node; and
determining the second storage parameter based on the identifier sets reported by the plurality of storage nodes.

8. The method according to claim 7, wherein the query request comprises a first query request, and the method further comprises:
obtaining an identifier of a fourth data segment, wherein the fourth data segment belongs to the second data stream, and the fourth data segment comprises a plurality of data fragments; and
generating the first query request based on the identifier of the fourth data segment, wherein the first query request is used to query a case in which the data fragments in the fourth data segment are stored in the distributed storage system (200).

9. A data storage apparatus (400), wherein the apparatus is adapted to be applied to a computing broker module (221) in a distributed storage system (200), and the apparatus comprises:
a data obtaining unit (401), configured to obtain a plurality of data fragments, wherein the plurality of data fragments belong to a first data segment in a first data stream;
a concurrent storage unit (402), configured to: in response to a first storage parameter indicating that the first data segment meets a storage condition, store the plurality of data fragments concurrently in the distributed storage system (200), wherein the first storage parameter is determined based on a storage case of a data segment in front of the first data segment in the first data stream, and the distributed storage system (200) comprises a plurality of storage nodes; and
a storage parameter update unit (403), configured to update the first storage parameter based on a storage case of the plurality of data fragments.

10. The apparatus (400) according to claim 9, wherein the plurality of data fragments comprise a first data fragment and a second data fragment, and the distributed storage system (200) comprises a first storage node (231) and a second storage node (232); and
the concurrent storage unit is specifically configured to send the first data fragment and the second data fragment to the first storage node (231), wherein a thread used to store the first data fragment and a thread used to store the second data fragment are different and are executed concurrently on the first storage node (231); or send the first data fragment to the first storage node (231), and send the second data fragment to the second storage node (232).

11. The apparatus according to claim 9 or 10, wherein
the concurrent storage unit is further configured to: in response to the first storage parameter indicating that a data segment in front of a second data segment in the first data stream has been stored in the distributed storage system (200), determine that the first data segment meets the storage condition, wherein the second data segment is a data segment in front of the first data segment in the first data stream, and a quantity of data segments between the second data segment and the first data segment in the first data stream is less than a preset quantity.

12. The apparatus according to claim 11, wherein
the storage parameter update unit (403) is specifically configured to: in response to that the data segment in front of the first data segment in the first data stream has been stored in the distributed storage system (200) and any data fragment in the first data segment has been stored in the distributed storage system (200), adjust the first storage parameter, so that the first storage parameter indicates that a third data segment meets the storage condition, wherein the third data segment is a data segment behind the first data segment in the first data stream, and a quantity of data segments between the first data segment and the third data segment in the first data stream is less than the preset quantity.

13. The apparatus according to claim 12, wherein the first data stream is sent by a client module (210), and after the first storage parameter is adjusted, the apparatus further comprises a notification unit (404); and
the notification unit (404) is configured to generate a notification message based on the first storage parameter, wherein the notification message indicates that the data fragments in the first data segment have been stored in the distributed storage system (200); and send the notification message to the client module (210).

14. The apparatus according to any one of claims 9 to 13, wherein the apparatus further comprises a storage parameter determining unit (405) and a data fragment determining unit (406);
the storage parameter determining unit (405) is configured to: in response to a fault occurring on a second computing broker module (222), determine a second storage parameter, wherein the second storage parameter indicates a case in which a data segment in a second data stream is stored in the distributed storage system (200), and the second computing broker module is configured to store the second data stream in the distributed storage system (200);
the data fragment determining unit (406) is configured to determine an identifier of a third data fragment based on the second storage parameter, wherein the third data fragment belongs to the second data stream, and a data fragment in front of the third data fragment in the second data stream has been stored in the distributed storage system (200) by the second computing broker module; and
the concurrent storage unit is further configured to store the third data fragment and a data fragment behind the third data fragment in the second data stream in the distributed storage system (200) based on the second storage parameter.

15. A computer program product comprising instructions, wherein when the computer program product runs on a computing device (600), the computing device is enabled to perform the method according to any one of claims 1 to 8.

## Patentansprüche

1. Datenspeicherungsverfahren, wobei das Verfahren auf ein Rechenbrokermodul (221) in einem verteilten Speichersystem (200) angewendet wird und das Verfahren Folgendes umfasst:
Erhalten (S301) einer Vielzahl von Datenfragmenten, wobei die Vielzahl von Datenfragmenten zu einem ersten Datensegment in einem ersten Datenstrom gehört;
gleichzeitiges Speichern (S302) der Vielzahl von Datenfragmenten in dem verteilten Speichersystem (200) als Reaktion darauf, dass ein erster Speicherparameter angibt, dass das erste Datensegment eine Speicherbedingung erfüllt, wobei der erste Speicherparameter basierend auf einem Speicherfall eines Datensegments vor dem ersten Datensegment in dem ersten Datenstrom bestimmt wird und das verteilte Speichersystem (200) eine Vielzahl von Speicherknoten umfasst; und
Aktualisieren (S303) des ersten Speicherparameters basierend auf einem Speicherfall der Vielzahl von Datenfragmenten.

2. Verfahren nach Anspruch 1, wobei die Vielzahl von Datenfragmenten ein erstes Datenfragment und ein zweites Datenfragment umfasst, das verteilte Speichersystem (200) einen ersten Speicherknoten (231) und einen zweiten Speicherknoten (232) umfasst und das gleichzeitige Speichern der Vielzahl von Datenfragmenten in dem verteilten Speichersystem (200) Folgendes umfasst:
Senden des ersten Datenfragments und des zweiten Datenfragments an den ersten Speicherknoten (231), wobei ein Thread, der dazu genutzt wird, das erste Datenfragment zu speichern, und ein Thread, der dazu genutzt wird, das zweite Datenfragment zu speichern, verschieden sind und gleichzeitig auf dem ersten Speicherknoten (231) ausgeführt werden; oder
Senden des ersten Datenfragments an den ersten Speicherknoten (231) und Senden des zweiten Datenfragments an den zweiten Speicherknoten (232).

3. Verfahren nach Anspruch 1 oder 2, wobei das Verfahren ferner Folgendes umfasst:
Bestimmen, dass das erste Datensegment die Speicherbedingung erfüllt, als Reaktion darauf, dass der erste Speicherparameter angibt, dass ein Datensegment vor einem zweiten Datensegment in dem ersten Datenstrom in dem verteilten Speichersystem (200) gespeichert wurde, wobei
das zweite Datensegment ein Datensegment vor dem ersten Datensegment in dem ersten Datenstrom ist und eine Anzahl an Datensegmenten zwischen dem zweiten Datensegment und dem ersten Datensegment in dem ersten Datenstrom geringer als eine voreingestellte Anzahl ist.

4. Verfahren nach Anspruch 3, wobei das Aktualisieren des ersten Speicherparameters basierend auf einem Speicherfall der Datenfragmente in dem ersten Datensegment Folgendes umfasst:
derartiges Anpassen des ersten Speicherparameters, dass der erste Speicherparameter angibt, dass ein drittes Datensegment die Speicherbedingung erfüllt, als Reaktion darauf, dass das Datensegment vor dem ersten Datensegment in dem ersten Datenstrom in dem verteilten Speichersystem (200) gespeichert wurde und ein beliebiges Datenfragment in dem ersten Datensegment in dem verteilten Speichersystem (200) gespeichert wurde, wobei
das dritte Datensegment ein Datensegment hinter dem ersten Datensegment in dem ersten Datenstrom ist und eine Anzahl an Datensegmenten zwischen dem ersten Datensegment und dem dritten Datensegment in dem ersten Datenstrom geringer als eine voreingestellte Anzahl ist.

5. Verfahren nach Anspruch 4, wobei der erste Datenstrom von einem Clientmodul (210) gesendet wird und das Verfahren nach dem Anpassen des ersten Speicherparameters ferner Folgendes umfasst:
Generieren einer Benachrichtigungsnachricht basierend auf dem ersten Speicherparameter, wobei die Benachrichtigungsnachricht angibt, dass die Datenfragmente in dem ersten Datensegment in dem verteilten Speichersystem (200) gespeichert wurden; und
Senden der Benachrichtigungsnachricht an das Clientmodul (210).

6. Verfahren nach einem der Ansprüche 1 bis 5, wobei das Verfahren ferner Folgendes umfasst:
Bestimmen eines zweiten Speicherparameters als Reaktion auf einen Fehler, der auf einem zweiten Rechenbrokermodul (222) auftritt, wobei der zweite Speicherparameter einen Fall angibt, in dem ein Datensegment in einem zweiten Datenstrom in dem verteilten Speichersystem (200) gespeichert wird, und das zweite Rechenbrokermodul (222) zum Speichern des zweiten Datenstroms in dem verteilten Speichersystem (200) ausgelegt ist;
Bestimmen (S502) einer Kennung eines dritten Datenfragments basierend auf dem zweiten Speicherparameter, wobei das dritte Datenfragment zu dem zweiten Datenstrom gehört und ein Datenfragment vor dem dritten Datenfragment in dem zweiten Datenstrom von dem zweiten Rechenbrokermodul (222) in dem verteilten Speichersystem (200) gespeichert wurde; und
Speichern (S503) des dritten Datenfragments und eines Datenfragments hinter dem dritten Datenfragment in dem zweiten Datenstrom in dem verteilten Speichersystem (200) basierend auf dem zweiten Speicherparameter.

7. Verfahren nach Anspruch 6, wobei das Bestimmen eines zweiten Speicherparameters Folgendes umfasst:
Senden einer Abfrageanforderung an die Vielzahl von Speicherknoten, wobei die Abfrageanforderung eine Kennung des zweiten Datenstroms umfasst;
Erhalten von Kennungssätzen, die von der Vielzahl von Speicherknoten gemeldet werden, wobei die Vielzahl von Speicherknoten einen dritten Speicherknoten umfasst und ein von dem dritten Speicherknoten gemeldeter Kennungssatz Kennungen umfasst, die von Datenfragmenten in dem zweiten Datenstrom sind und die in dem dritten Speicherknoten gespeichert werden; und
Bestimmen des zweiten Speicherparameters basierend auf den von der Vielzahl von Speicherknoten gemeldeten Kennungssätzen.

8. Verfahren nach Anspruch 7, wobei die Abfrageanforderung eine erste Abfrageanforderung umfasst und das Verfahren ferner Folgendes umfasst:
Erhalten einer Kennung eines vierten Datensegments, wobei das vierte Datensegment zu dem zweiten Datenstrom gehört und das vierte Datensegment eine Vielzahl von Datenfragmenten umfasst; und
Generieren der ersten Abfrageanforderung basierend auf der Kennung des vierten Datensegments, wobei die erste Abfrageanforderung dazu genutzt wird, einen Fall abzufragen, in dem die Datenfragmente in dem vierten Datensegment in dem verteilten Speichersystem (200) gespeichert werden.

9. Datenspeicherungseinrichtung (400), wobei die Einrichtung geeignet ist, um auf ein Rechenbrokermodul (221) in einem verteilten Speichersystem (200) angewendet zu werden, und die Einrichtung Folgendes umfasst:
eine Datenerhaltungseinheit (401), die zum Erhalten einer Vielzahl von Datenfragmenten ausgelegt ist, wobei die Vielzahl von Datenfragmenten zu einem ersten Datensegment in einem ersten Datenstrom gehört;
eine Einheit (402) zur gleichzeitigen Speicherung, die zu Folgendem ausgelegt ist: gleichzeitiges Speichern der Vielzahl von Datenfragmenten in dem verteilten Speichersystem (200) als Reaktion darauf, dass ein erster Speicherparameter angibt, dass das erste Datensegment eine Speicherbedingung erfüllt, wobei der erste Speicherparameter basierend auf einem Speicherfall eines Datensegments vor dem ersten Datensegment in dem ersten Datenstrom bestimmt wird und das verteilte Speichersystem (200) eine Vielzahl von Speicherknoten umfasst; und
eine Speicherparameteraktualisierungseinheit (403), die zum Aktualisieren des ersten Speicherparameters basierend auf einem Speicherfall der Vielzahl von Datenfragmenten ausgelegt ist.

10. Einrichtung (400) nach Anspruch 9, wobei die Vielzahl von Datenfragmenten ein erstes Datenfragment und ein zweites Datenfragment umfasst und das verteilte Speichersystem (200) einen ersten Speicherknoten (231) und einen zweiten Speicherknoten (232) umfasst; und
die Einheit zur gleichzeitigen Speicherung insbesondere zum Senden des ersten Datenfragments und des zweiten Datenfragments an den ersten Speicherknoten (231) ausgelegt ist, wobei ein Thread, der dazu genutzt wird, das erste Datenfragment zu speichern, und ein Thread, der dazu genutzt wird, das zweite Datenfragment zu speichern, verschieden sind und gleichzeitig auf dem ersten Speicherknoten (231) ausgeführt werden; oder das erste Datenfragment an den ersten Speicherknoten (231) zu senden und das zweite Datenfragment an den zweiten Speicherknoten (232) zu senden.

11. Einrichtung nach Anspruch 9 oder 10, wobei
die Einheit zur gleichzeitigen Speicherung ferner zu Folgendem ausgelegt ist: Bestimmen, dass das erste Datensegment die Speicherbedingung erfüllt, als Reaktion darauf, dass der erste Speicherparameter angibt, dass ein Datensegment vor einem zweiten Datensegment in dem ersten Datenstrom in dem verteilten Speichersystem (200) gespeichert wurde, wobei das zweite Datensegment ein Datensegment vor dem ersten Datensegment in dem ersten Datenstrom ist und eine Anzahl an Datensegmenten zwischen dem zweiten Datensegment und dem ersten Datensegment in dem ersten Datenstrom geringer als eine voreingestellte Anzahl ist.

12. Einrichtung nach Anspruch 11, wobei
die Speicherparameteraktualisierungseinheit (403) insbesondere zu Folgendem ausgelegt ist: derartiges Anpassen des ersten Speicherparameters, dass der erste Speicherparameter angibt, dass ein drittes Datensegment die Speicherbedingung erfüllt, als Reaktion darauf, dass das Datensegment vor dem ersten Datensegment in dem ersten Datenstrom in dem verteilten Speichersystem (200) gespeichert wurde und ein beliebiges Datenfragment in dem ersten Datensegment in dem verteilten Speichersystem (200) gespeichert wurde, wobei das dritte Datensegment ein Datensegment hinter dem ersten Datensegment in dem ersten Datenstrom ist und eine Anzahl an Datensegmenten zwischen dem ersten Datensegment und dem dritten Datensegment in dem ersten Datenstrom geringer als eine voreingestellte Anzahl ist.

13. Einrichtung nach Anspruch 12, wobei der erste Datenstrom von einem Clientmodul (210) gesendet wird und die Einrichtung, nachdem der erste Speicherparameter angepasst ist, ferner eine Benachrichtigungseinheit (404) umfasst; und
die Benachrichtigungseinheit (404) zum Generieren einer Benachrichtigungsnachricht basierend auf dem ersten Speicherparameter ausgelegt ist, wobei die Benachrichtigungsnachricht angibt, dass die Datenfragmente in dem ersten Datensegment in dem verteilten Speichersystem (200) gespeichert wurden; und Senden der Benachrichtigungsnachricht an das Clientmodul (210).

14. Einrichtung nach einem der Ansprüche 9 bis 13, wobei die Einrichtung ferner eine Speicherparameterbestimmungseinheit (405) und eine Datenfragmentbestimmungseinheit (406) umfasst;
die Speicherparameterbestimmungseinheit (405) zu Folgendem ausgelegt ist: Bestimmen eines zweiten Speicherparameters als Reaktion auf einen Fehler, der auf einem zweiten Rechenbrokermodul (222) auftritt, wobei der zweite Speicherparameter einen Fall angibt, in dem ein Datensegment in einem zweiten Datenstrom in dem verteilten Speichersystem (200) gespeichert ist, und das zweite Rechenbrokermodul zum Speichern des zweiten Datenstroms in dem verteilten Speichersystem (200) ausgelegt ist;
die Datenfragmentbestimmungseinheit (406) zum Bestimmen einer Kennung eines dritten Datenfragments basierend auf dem zweiten Speicherparameter ausgelegt ist, wobei das dritte Datenfragment zu dem zweiten Datenstrom gehört und ein Datenfragment vor dem dritten Datenfragment in dem zweiten Datenstrom von dem zweiten Rechenbrokermodul in dem verteilten Speichersystem (200) gespeichert wurde; und
die Einheit zur gleichzeitigen Speicherung ferner zum Speichern des dritten Datenfragments und eines Datenfragments hinter dem dritten Datenfragment in dem zweiten Datenstrom in dem verteilten Speichersystem (200) basierend auf dem zweiten Speicherparameter ausgelegt ist.

15. Computerprogrammprodukt, umfassend Anweisungen, wobei, wenn das Computerprogrammprodukt auf einer Rechenvorrichtung (600) läuft, es der Rechenvorrichtung ermöglicht wird, das Verfahren nach einem der Ansprüche 1 bis 8 durchzuführen.

## Revendications

1. Procédé de stockage de données, dans lequel le procédé est appliqué à un module de courtier informatique (221) dans un système de stockage distribué (200), et le procédé comprend :
l'obtention (S301) d'une pluralité de fragments de données, dans lequel la pluralité de fragments de données appartiennent à un premier segment de données dans un premier flux de données ;
en réponse à un premier paramètre de stockage indiquant que le premier segment de données satisfait à une condition de stockage, le stockage (S302) de la pluralité de fragments de données de manière concurrente dans le système de stockage distribué (200), dans lequel le premier paramètre de stockage est déterminé sur la base d'un cas de stockage d'un segment de données en amont du premier segment de données dans le premier flux de données, et le système de stockage distribué (200) comprend une pluralité de nœuds de stockage ; et
la mise à jour (S303) du premier paramètre de stockage sur la base d'un cas de stockage de la pluralité de fragments de données.

2. Procédé selon la revendication 1, dans lequel la pluralité de fragments de données comprennent un premier fragment de données et un deuxième fragment de données, le système de stockage distribué (200) comprend un premier nœud de stockage (231) et un deuxième nœud de stockage (232), et le stockage de la pluralité de fragments de données de manière concurrente dans le système de stockage distribué (200) comprend :
l'envoi du premier fragment de données et du deuxième fragment de données au premier nœud de stockage (231), dans lequel un thread utilisé pour stocker le premier fragment de données et un thread utilisé pour stocker le deuxième fragment de données sont différents et sont exécutés de manière concurrente sur le premier nœud de stockage (231) ; ou
l'envoi du premier fragment de données au premier nœud de stockage (231), et l'envoi du deuxième fragment de données au deuxième nœud de stockage (232).

3. Procédé selon la revendication 1 ou 2, dans lequel le procédé comprend en outre :
en réponse au premier paramètre de stockage indiquant qu'un segment de données en amont d'un deuxième segment de données dans le premier flux de données a été stocké dans le système de stockage distribué (200), la détermination que le premier segment de données satisfait à la condition de stockage, dans lequel
le deuxième segment de données est un segment de données en amont du premier segment de données dans le premier flux de données, et une quantité de segments de données entre le deuxième segment de données et le premier segment de données dans le premier flux de données est inférieure à une quantité prédéfinie.

4. Procédé selon la revendication 3, dans lequel la mise à jour du premier paramètre de stockage sur la base d'un cas de stockage des fragments de données dans le premier segment de données comprend :
en réponse au fait que le segment de données en amont du premier segment de données dans le premier flux de données a été stocké dans le système de stockage distribué (200) et que tout fragment de données dans le premier segment de données a été stocké dans le système de stockage distribué (200), le réglage du premier paramètre de stockage, de sorte que le premier paramètre de stockage indique qu'un troisième segment de données satisfait à la condition de stockage, dans lequel
le troisième segment de données est un segment de données en aval du premier segment de données dans le premier flux de données, et une quantité de segments de données entre le premier segment de données et le troisième segment de données dans le premier flux de données est inférieure à la quantité prédéfinie.

5. Procédé selon la revendication 4, dans lequel le premier flux de données est envoyé par un module client (210), et après le réglage du premier paramètre de stockage, le procédé comprend en outre :
la génération d'un message de notification sur la base du premier paramètre de stockage, dans lequel le message de notification indique que les fragments de données dans le premier segment de données ont été stockés dans le système de stockage distribué (200) ; et
l'envoi du message de notification au module client (210).

6. Procédé selon l'une quelconque des revendications 1 à 5, dans lequel le procédé comprend en outre :
en réponse à une panne survenue sur un second module de courtier informatique (222), la détermination d'un second paramètre de stockage, dans lequel le second paramètre de stockage indique un cas dans lequel un segment de données dans un second flux de données est stocké dans le système de stockage distribué (200), et le second module de courtier informatique (222) est configuré pour stocker le second flux de données dans le système de stockage distribué (200) ;
la détermination (S502) d'un identifiant d'un troisième fragment de données sur la base du second paramètre de stockage, dans lequel le troisième fragment de données appartient au second flux de données, et un fragment de données en amont du troisième fragment de données dans le second flux de données a été stocké dans le système de stockage distribué (200) par le second module de courtier informatique (222) ; et
le stockage (S503) du troisième fragment de données et d'un fragment de données en aval du troisième fragment de données dans le second flux de données dans le système de stockage distribué (200) sur la base du second paramètre de stockage.

7. Procédé selon la revendication 6, dans lequel la détermination d'un second paramètre de stockage comprend :
l'envoi d'une demande d'interrogation à la pluralité de nœuds de stockage, dans lequel la demande d'interrogation comprend un identifiant du second flux de données ;
l'obtention d'ensembles d'identifiants signalés par la pluralité de nœuds de stockage, dans lequel la pluralité de nœuds de stockage comprennent un troisième nœud de stockage, et un ensemble d'identifiants signalé par le troisième nœud de stockage comprend des identifiants qui sont des fragments de données dans le second flux de données et qui sont stockés dans le troisième nœud de stockage ; et
la détermination du second paramètre de stockage sur la base des ensembles d'identifiants signalés par la pluralité de nœuds de stockage.

8. Procédé selon la revendication 7, dans lequel la demande d'interrogation comprend une première demande d'interrogation, et le procédé comprend en outre :
l'obtention d'un identifiant d'un quatrième segment de données, dans lequel le quatrième segment de données appartient au second flux de données, et le quatrième segment de données comprend une pluralité de fragments de données ; et
la génération de la première demande d'interrogation sur la base de l'identifiant du quatrième segment de données, dans lequel la première demande d'interrogation est utilisée pour interroger un cas dans lequel les fragments de données dans le quatrième segment de données sont stockés dans le système de stockage distribué (200).

9. Appareil de stockage de données (400), dans lequel l'appareil est conçu pour être appliqué à un module de courtier informatique (221) dans un système de stockage distribué (200), et l'appareil comprend :
une unité d'obtention de données (401), configurée pour obtenir une pluralité de fragments de données, dans lequel la pluralité de fragments de données appartiennent à un premier segment de données dans un premier flux de données ;
une unité de stockage concurrente (402), configurée pour : en réponse à un premier paramètre de stockage indiquant que le premier segment de données satisfait à une condition de stockage, stocker la pluralité de fragments de données de manière concurrente dans le système de stockage distribué (200), dans lequel le premier paramètre de stockage est déterminé sur la base d'un cas de stockage d'un segment de données en amont du premier segment de données dans le premier flux de données, et le système de stockage distribué (200) comprend une pluralité de nœuds de stockage ; et
une unité de mise à jour de paramètres de stockage (403), configurée pour mettre à jour le premier paramètre de stockage sur la base d'un cas de stockage de la pluralité de fragments de données.

10. Appareil (400) selon la revendication 9, dans lequel la pluralité de fragments de données comprennent un premier fragment de données et un deuxième fragment de données, et le système de stockage distribué (200) comprend un premier nœud de stockage (231) et un deuxième nœud de stockage (232) ; et
l'unité de stockage concurrente est spécifiquement configurée pour envoyer le premier fragment de données et le deuxième fragment de données au premier nœud de stockage (231), dans lequel un thread utilisé pour stocker le premier fragment de données et un thread utilisé pour stocker le deuxième fragment de données sont différents et sont exécutés de manière concurrente sur le premier nœud de stockage (231) ; ou envoyer le premier fragment de données au premier nœud de stockage (231) et envoyer le deuxième fragment de données au deuxième nœud de stockage (232).

11. Appareil selon la revendication 9 ou 10, dans lequel
l'unité de stockage concurrente est en outre configurée pour :
en réponse au premier paramètre de stockage indiquant qu'un segment de données en amont d'un deuxième segment de données dans le premier flux de données a été stocké dans le système de stockage distribué (200), déterminer que le premier segment de données satisfait à la condition de stockage, dans lequel le deuxième segment de données est un segment de données en amont du premier segment de données dans le premier flux de données,
et une quantité de segments de données entre le deuxième segment de données et le premier segment de données dans le premier flux de données est inférieure à une quantité prédéfinie.

12. Appareil selon la revendication 11, dans lequel
l'unité de mise à jour de paramètres de stockage (403) est spécifiquement configurée pour : en réponse au fait que le segment de données en amont du premier segment de données dans le premier flux de données a été stocké dans le système de stockage distribué (200) et que tout fragment de données dans le premier segment de données a été stocké dans le système de stockage distribué (200), régler le premier paramètre de stockage, de sorte que le premier paramètre de stockage indique qu'un troisième segment de données satisfait à la condition de stockage, dans lequel le troisième segment de données est un segment de données en aval du premier segment de données dans le premier flux de données, et une quantité de segments de données entre le premier segment de données et le troisième segment de données dans le premier flux de données est inférieure à la quantité prédéfinie.

13. Appareil selon la revendication 12, dans lequel le premier flux de données est envoyé par un module client (210), et après le réglage du premier paramètre de stockage, l'appareil comprend en outre une unité de notification (404) ; et
l'unité de notification (404) est configurée pour générer un message de notification sur la base du premier paramètre de stockage, dans lequel le message de notification indique que les fragments de données dans le premier segment de données ont été stockés dans le système de stockage distribué (200) ; et envoyer le message de notification au module client (210).

14. Appareil selon l'une quelconque des revendications 9 à 13, dans lequel l'appareil comprend en outre une unité de détermination de paramètres de stockage (405) et une unité de détermination de fragments de données (406) ;
l'unité de détermination de paramètres de stockage (405) est configurée pour : en réponse à une panne survenue sur un second module de courtier informatique (222), déterminer un second paramètre de stockage, dans lequel le second paramètre de stockage indique un cas dans lequel un segment de données dans un second flux de données est stocké dans le système de stockage distribué (200), et le second module de courtier informatique est configuré pour stocker le second flux de données dans le système de stockage distribué (200) ;
l'unité de détermination de fragments de données (406) est configurée pour déterminer un identifiant d'un troisième fragment de données sur la base du second paramètre de stockage, dans lequel le troisième fragment de données appartient au second flux de données, et un fragment de données en amont du troisième fragment de données dans le second flux de données a été stocké dans le système de stockage distribué (200) par le second module de courtier informatique ; et
l'unité de stockage concurrente est en outre configurée pour stocker le troisième fragment de données et un fragment de données en aval du troisième fragment de données dans le second flux de données dans le système de stockage distribué (200) sur la base du second paramètre de stockage.

15. Produit de programme informatique comprenant des instructions, dans lequel lorsque le produit de programme informatique est exécuté sur un dispositif informatique (600), le dispositif informatique est activé pour réaliser le procédé selon l'une quelconque des revendications 1 à 8.
